# EUROPEAN PATENT SPECIFICATION

(11) **EP 2 531 562 B1**
(45) Date of publication and mention of the grant of the patent: **24.01.2018**
(21) Application number: 11701407.6
(22) Date of filing: 31.01.2011
(51) Int. Cl.: C09C 1/00

(54) **PIGMENT COMPOSITIONS WITH IMPROVED SPARKLING EFFECT**
PIGMENTZUSAMMENSETZUNGEN MIT VERBESSERTEM GLITZEREFFEKT
COMPOSITIONS DE PIGMENT POSSÉDANT UN EFFET LUISANT AMÉLIORÉ

(30) Priority: 04.02.2010 US 301245 P
(43) Date of publication of application: 12.12.2012
(73) Proprietor: BASF SE, 67056 Ludwigshafen am Rhein (DE)
(72) Inventor: SCHMID, Raimund, 67435 Neustadt (DE); LAVALLEE, Carolyn, Croton on Hudson, NY (US); JONES, S. A., Budd Lake, NJ 07828 (US); CARROLL, James, Cortland Manor, NJ 07828 (US)
(74) Representative: BASF IP Association
(86) International application number: PCT/EP2011/051288
(87) International publication number: WO 2011/095447

(56) References cited:
- WO-A1-2009/007248
- WO-A1-2009/135784
- WO-A1-2010/066605

## Description

The present invention relates to pigment compositions with adjustable and/or improved sparkling effect comprising A) a platelet-like perlite; and B) an effect pigment; and a process for their production and their use in paints, ink-jet printing, for dyeing textiles, for pigmenting coatings (paints), printing inks, plastics, cosmetics, glazes for ceramics and glass. The pigment compositions show an improved sparkle effect; in particular an attractive high sparkle intensity at all viewing angles.

Sparkling effects on an object can be defined as locations where compared to the adjacent area in directed light a light of higher intensity is observed. They are caused by light reflecting pigments incorporated into a coating on the surface of the object or by mass coloration of the object with light reflecting pigments.

The light reflecting properties of pigments are depending on particle size, particle shape and chemical composition. A weak light reflection is perceived when flakes with diameters < 5 µm reflect incoming light. Human eyes are perceiving light reflections caused by flakes with diameters of 20 µm and more as strong.

Natural- or synthetic mica based pigments are causing sparkling effects when incorporated in paints or plastics.

In the past sparkling behaviour of effect pigments has been described only verbally. Depending on the diameter of the flakes sparkling effects were perceived and described as being "subtle" (flake diameters ∼ 5 µm - 15 µm), "strong" (flake diameters ∼ 15 - 25 µm), "eye-catching" (flake diameters ∼ 25-100 µm) and finally "extreme" (flake diameters > 100 µm).

As this classification was not good enough in terms of quantitative description of sparkling effects measuring devices have been developed during the last 10 years. One example is the Byk-mac from Byk-Gardner GmbH (Lausitzer Straße 8, 82538 Geretsried, Germany). This device is allowing to measure sparkle and graininess for flake characterization. For three different illumination angles the sparkling behaviour of flakes is characterized with the following paramters:
- Sparkling area (S_a) corresponds to the number of light reflections within the measuring given;
- Sparkling intensity (S_i) corresponds the intensity of the light reflections.

Under diffuse light no sparkling effect can be observed. The visual appearance of sparkling pigments under diffuse light conditions is verbally described with texture, coarseness or graininess. The Byk-mac is determining the graininess value G_{diff} to describe that effect.

The most common sparkling effect pigments are based on metal oxide coated glass flakes or metal oxide coated alumina flakes. Such effect pigments are providing a characteristical sparkling effect.

EP1469042 discloses a pigment mixture comprising component A containing glass flakes based effect pigment(s) and component B containing organic and/or inorganic flake-form, needle-shaped, spherical or crystalline colorants and/or fillers. The admixture of one or more colorants to the coated glass flakes enables a rainbow effect to be imparted on the application systems, increases the color effect and achieves novel color effects.

US7,387,669 discloses luster pigments having pronounced sparkle which are based on aluminum platelets which have been coated with iron oxide and have in the precoated state an average platelet size from 8 to 30 µm, an average platelet thickness from 300 to 600 nm and an aspect ratio from 15 to 70.

US6517628 (EP1045014) relates to a pigment mixture comprising:
a component A comprising a mica, SiO₂ flake, glass flake, Al₂O₃ flake or polymer flake substrate coated with two or more layers including at least one layer of high refractive index adjacent to at least one layer of low refractive index and component B comprising a platelet-shaped, acicular or spherical colorant and/or filler not within the definition of component A. Component B may comprise pearl luster pigments, colored glass particles, carbon black, organic color pigments and/or inorganic color pigments. It is the object of US6517628 to provide a pigment mixture which is notable for comparatively high hiding power and which lends itself well to incorporation into the respective system in which it is used.

US6294010 relates to a pigment mixture comprising a component A and a component B, wherein component A comprises Al₂O₃ flakes coated with one or more metals, metal oxides or metal sulfides, and wherein component B comprises one or more functional pigments. Preferred are Al₂O₃ flakes coated with TiO₂, Fe₂O₃, or a combination of TiO₂ and Fe₂O₃. Component B comprises an electrically conductive pigment, a magnetic pigment, an IR-reflective pigment, a lasermarkable pigments, or a mixture thereof. US6294010 provides a pigment mixture with additional functions (conductivity, magnetism, IR-reflection) caused by component B.

US6267810 relates to a pigment mixture comprising a component A and a component B, wherein component A comprises Al₂O₃ flakes coated with one or more metals, metal oxides or metal sulfides, and wherein component B comprises special-effect pigments. Component B may comprise i) one or more of metal platelets coated with one or more metal oxides, ii) graphite platelets, iii) aluminum platelets, iv) phyllosilicates, v) Fe₂O₃-flakes, SiO₂-flakes, or TiO₂-flakes uncoated or coated with one or more metal oxides, vi) glass platelets and/or vii) ceramic platelets. The term "special-effect pigments" may also comprise pearl luster pigments, i.e. mica flake pigments coated with one or more metal oxides, which are obtainable, for example, from Merck KGaA, Darmstadt, under the tradenames Iriodin®, Afflair® and Timiron®. US6267810 describes blends of coated Al₂O₃ flakes (= known for sparkle) with all other effect pigments known at that time. The disadvantage of pigments on basis of Al₃O₃-flakes is the complicated and expensive production process.

WO2006110359 relates to an effect pigment comprising a synthetic platelet coated with a translucent metal oxide film, said synthetic platelet having a size distribution characterized as a D10 of at least 9.5 µm (microns), a D50 of between about 20 and less than 40 µm (microns), and a D90 of over 35 to less than 85 µm (microns). The metal oxide film can comprise titanium dioxide, or iron oxide. The synthetic platelet is selected from aluminum oxide, silicon dioxide, bismuth oxychloride, boron nitride, and glass. WO2006110359 teaches how to modify the particle size distribution of a pigment in order to optimize sparkle effect.

WO2004061012 discloses effect pigments comprising a coated mixture of at least two different materials wherein each of said at least two different materials is present from at least about 5 weight percent to about 95 weight percent based on the total of said at least two different materials and said effect pigment exhibits visual homogeneity. The effect pigment is a mixture of coated laminar platelets, preferably metal oxide-coated laminar platelets, in which the platelets are a mixture of different materials, e. g., glass and mica, and in which the effect pigment exhibits visual homogeneity which is produced by blending the different platelets before they are coated. WO2004061012 teaches that colouristic properties (chroma) of blends of effect pigments, which are prepared by blending the different substrates before they are coated, are much better than blends of effect pigments, which are obtained by blending substrates, which have already been coated beforehand.

US2004191198A1 relates to pigment mixtures which have at least two components, where component A comprises effect pigments based on glass flakes and component B comprises flake-form, needle-shaped, spherical or crystalline colorants or fillers, and to the use thereof, in particular in cosmetic formulations and for the coloring or as a coating of products in the foods and pharmaceuticals sector. The admixture of one or more colorants to the coated glass flakes enables a rainbow effect to be imparted on the application systems, increases the color effect and achieves novel color effects. As component B flake-form, needle-shaped, spherical and crystalline colorants or fillers are preferred which have a particle size of from 0.01 to 1 µm.

US2008305184 relates to a pigment mixture consisting of at least two constituents, constituent A being uncoated, monocoated or multicoated glass lamellae, and constituent B being nacreous pigments based on phyllosilicates, SiO₂ lamellae, Fe₂O₃ lamellae or Al₂O₃ lamellae. The glass flakes are completely or partly coated with TiO₂ and/or Fe₂O₃. Component B may be a pearlescent pigment based on phyllosilicates which is coated with TiO₂ and/or Fe₂O₃. The phyllosilicate is preferably natural or synthetic mica. Through the addition of uncoated, monocoated or multicoated glass lamellae the brightness and gloss of the nacreous pigments is improved.

US2002120051A1 discloses plastic parts comprising (a) lustrous pigments comprising metallic or strongly light-refracting pigment particles or platelets which have a predominantly two-dimensional shape, and (b) hollow or solid filler particles which have a substantially isometric body shape and have a diameter of 10 to 200 µm.

FR 2924929 (A1) relates to cosmetic compositions for make-up and/or care of lips, comprising at least a fatty phase and at least perlite particle (0.05 wt.%).

FR2924935A1 relates to cosmetic compositions for the care and make-up of lips, which comprises at least 10 wt.% of filler, and at least a silicone compound having a melting point of 20-60°C. The cosmetic composition of example 1 of FR2924935A1 comprises perlite (Optimat 1430® from World minerals) and pigments as colorant.

WO2009074960A2 (FR2924936A1) is directed toward protecting a cosmetic composition for caring for and/or making up the lips, comprising a fatty phase containing at least one organopolysiloxane elastomer and at least one hydrocarbon-based pasty compound. In example 1 of WO2009074960A2 (FR2924936A1) a stick of a lipstick is described comprising perlite (Optimat 1430® from World minerals) and dyes (iron oxides, Yellow 6 Lake, Red 7, Red 28 Lake).

DE3224558A1 relates to the use of titanium dioxide/mica pearl or colour lustre, bismuth oxychloride pearl lustre or bismuth oxychloride/mica pearl lustre pigments known under the designation of 'pearl lustre pigments for cosmetics' as known commercial products as metallically lustrous colour pigments free from polluting toxic heavy metals in printing technology, if desired with a mixture of finely divided mica, or expanded vermiculite or perlite, in particular for labels with gold or metal effect on glass bottles or a wide range of packaging materials, or on articles such as book spines, leather material, plastic material. By adding the filler the colours can be gradated.

WO2009007248 discloses pigments comprising a plate-like substrate of perlite, and a dielectric material, especially a metal oxide, having a high index of refraction; and/or a metal layer, especially a thin semi-transparent metal layer. The pigments may be used in coatings in admixture with other pigments such as effect pigments or transparent colored pigments.

WO2010066605 discloses pigments comprising a plate-like substrate of perlite which does not contain 3D twin structure particles contained in milled expanded perlite in an amount of greater than 5% by weight, and a dielectric material, especially a metal oxide, having a high index of refraction; and/or a metal layer, especially a thin semi-transparent metal layer. The pigments may be used in coatings in admixture with organic, inorganic or effect pigments.

WO2009135784 discloses a pearlescent pigment comprising a platelet-shaped substrate which is coated with a metal oxide layer and a protective layer, wherein the substrate may be a perlite substrate. The pigment may be combined with conventional transparent pigments, for example, organic pigments.

The disadvantage of metal oxide coated glass flakes or metal oxide coated alumina flakes is the costly synthesis (high energy, waste) and the high price.

Conventional pearl pigments based on metal-coated or oxide coated, natural or synthetic mica show when measured with the Byk-mac a high sparkling intensity at the 15°-illumination angle. At higher illumination angles, the sparkling intensity is showing lower values. For example, metal-oxide coated synthetic mica pigments show high sparkle intensity S_i and high sparkle area S_a in the face angle. In down flop (= at higher angles) the number of light reflections (S_a) and their intensity (S_i) is much lower.

It has now surprisingly been found that blends of effect pigments and platelet-like perlite show an improved sparkling behaviour, in particular an unexpected attractive higher sparkle intensity at all angles. Said effect is surprising and was not predictable. In addition, the sparkle area S_a and the angle dependence of S_a can be adjusted.

Accordingly, the present invention provides pigment compositions with improved sparkling effect comprising
A) a platelet-like perlite consisting of perlite; and
B) an effect pigment, selected from a platelet-like substrate, coated with (a) dielectric material, and/or a metal layer, a metal effect pigment or a platelet-like organic pigment;
and a process for their production and their use in paints, ink-jet printing, for dyeing textiles, for pigmenting coatings (paints), printing inks, plastics, cosmetics, glazes for ceramics and glass.

The dielectric material is especially a (metal) oxide, having a high, or low index of refraction. Examples are given below.

The wording "coated with (a) dielectric material and/or metal" means that the substrate can be coated with a layer of a dielectric material or a (semitransparent or opaque) metal layer; or it can be coated with two, or more layers of dielectric material and/or metal. Examples of so-called "multilayer" pigments are given below. The metal layer as part of such a multilayer system is especially a thin semi-transparent metal layer.

From a design point of view it is desirable to have more possibilities to customize a styling in terms of angle dependant sparkling effect without being forced to use expensive pigments. Said object has been solved by the pigment compositions of the present invention with improved and adjustable sparkling effect.

In principal, the platelet-like perlite (perlite) can be contained in any amount as long as the effect of the present invention is obtained. Typically, the platelet-like perlite (perlite based) is contained in an amount of 0.5 - 80 % by weight, especially 2 - 50 % by weight, based on the sum of perlite and coated platelet-like substrate (effect pigment). Outstanding effects are obtained, if the perlite is contained in an amount of 3 - 40 % by weight, in particular 5 - 30 % by weight.

If a strong angle dependency of S_a is desired, the amount of perlite should be at 2 - 20 % by weight. If a low angle dependency of S_a is desired the amount of perlite substrate should be preferably at 30 - 80 % by weight.

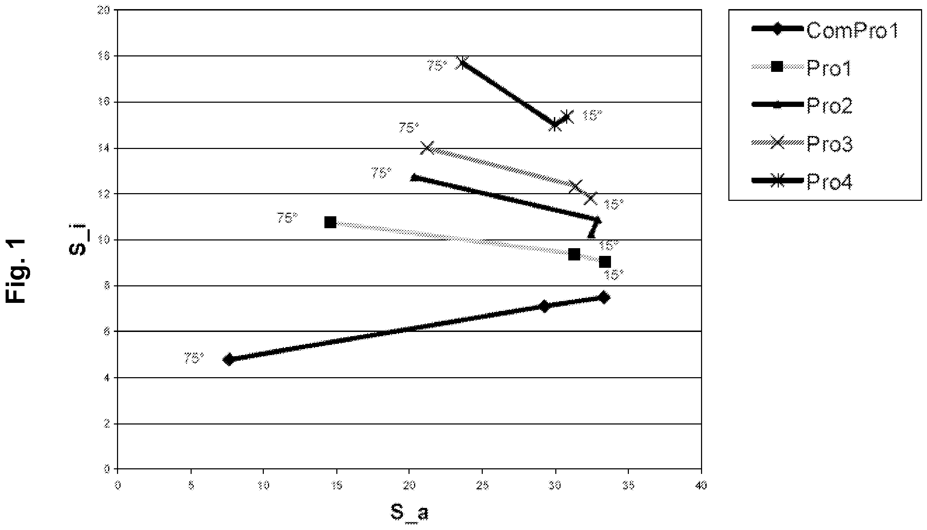

**Fig. 1** is a graph showing the Sparkling intensity (S_i) vs. the Sparkling area (S_a) of pigments of the present invention **(Pro1 to Pro 4)** and comparative pigments **(ComPro1).** The comparative example **ComPro1** is a red iron oxide coated mica. **Pro1** is a modified version where the sparkle effect has been adjusted to a significant higher sparkle intensity at higher angles (high S_i) and still a strong angle dependency of the number of reflections (low S_a at higher observation angles). **Pro4** is a modified version with a high sparkle intensity S_i at all angles and a high number of light reflections at all angles (= low angle dependency of S_a).
**Fig. 2** is a graph showing the Sparkling intensity (S_i) vs. the Sparkling area (S_a) of pigments of the present invention **(Pro5** to **Pro7)** and comparative pigment **(ComPro2).**
**Fig. 3** is a graph showing the Sparkling intensity (S_i) vs. the Sparkling area (S_a) of a pigment of the present invention **(Pro8)** and comparative pigment **(ComPro3).**
**Fig. 4** is a graph showing the Sparkling intensity (S_i) vs. the Sparkling area (S_a) of pigments of the present invention **(Pro9** to **Pro12)** and comparative pigment **(ComPro4).**
**Fig. 5** is a graph showing the Sparkling intensity (S_i) vs. the Sparkling area (S_a) of pigments of the present invention **(Pro13** to **Pro16)** and comparative pigment **(ComPro5).**
**Fig. 6** is a graph showing the Sparkling intensity (S_i) vs. the Sparkling area (S_a) of pigments of the present invention **(Pro17** to **Pro20)** and comparative pigment **(ComPro6).**
**Fig. 7** is a graph showing the Sparkling intensity (S_i) vs. the Sparkling area (S_a) of pigments of the present invention **(Pro21** to **Pro24)** and comparative pigment **(ComPro7).**
**Fig. 8** is a graph showing the Sparkling intensity (S_i) vs. the Sparkling area (S_a) of pigments of the present invention **(Pro25** to **Pro28)** and comparative pigment **(ComPro8).**

The present invention is describing how new sparkling pigment compositions can be tailored by using effect pigments together with perlite.

The present pigment compositions are obtained by blending the effect pigments with the perlite. With the present invention the sparkling parameters S_a and S_i can be adjusted by selecting the appropriate material composition.

Inorganic (metallic or non-metallic), or organic platelet-shaped particles or pigments are effect pigments, (especially metal effect pigments or interference pigments), that is to say, pigments that, besides imparting colour to an application medium, impart additional properties, for example angle dependency of the colour (flop), lustre (not surface gloss) or texture. On metal effect pigments, substantially oriented reflection occurs at directionally oriented pigment particles. In the case of interference pigments, the colour-imparting effect is due to the phenomenon of interference of light in thin, highly refractive layers. Effect pigments are known. Reference is made, for example, to Gerhard Pfaff and Peter Reynders, Chem. Rev. 99 (1999) 1963-1981; "Spezielle Effektpigmente" (G. Pfaff, Vincentz Network, Hannover, 2nd revised edition, 2007 and Metalleffekt-Pigmente (P. Wissling, Vincentz Network, Hannover, 2005).

Plateletlike organic pigments, such as plateletlike quinacridones, phthalocyanine, fluororubine, dioxazines, or diketopyrrolopyrroles can advantageously be used as component A. Examples are plateletlike copperphthaloycyanine, 1,9-dichloroquinacridone or 1,9-dichloroanthraquinone. 2,9-dichloroquinacridone in platelet form is, for example, described in WO08/055807. The 2,9-dichloroquinacridone in platelet form described therein has a length of 1 to 45 µm, a width of 0.1 to 20 µm and an average thickness of 0.01 to 5 µm.

Examples of liquid-crystal goniochromatic particles that may be used as component B include those sold by the company Chenix and also the products sold under the name Helicone® HC by the company Wacker.

In addition, metal effect pigments can advantageously be used as component B. Among the metals that may be present in said particles, mention may be made, for example, of Ag, Au, Cu, Al, Ni, Sn, Mg, Cr, Mo, Ti, Zr, Pt, V, W and Zn, and mixtures or alloys thereof. Ag, Au, Cu, Al, Zn, Ni and Ti and mixtures or alloys thereof (for example, steel, bronzes and brasses) are preferred metals. As illustrations of these particles, mention may be made of aluminum particles (platelet-shaped and of substantially circular form (silver dollar type) or of less regular surface form (cornflake type), such as those sold under the names Sparkle Silver®, Starbrite® and Silbercote® by the company Siberline, Alpate® range by the company Toyo and STAPA® range by the company Eckart. Mention may also be made of the silica-coated aluminum particles sold under the name STAPA® Hydrolan, or Visionaire from the company Eckart, and "Rotosafe Bronze," which is an alloy of copper, sold by the company Eckart. The median particle size (d₅₀) of the silver dollar type, or cornflake type aluminium particles is preferably in the range of from 5 to 100 µm, especially 10 to 60 µm and the average thickness is in the range of from 80 nm to 700 nm.

Examples of symmetrical multilayer interference structures that may be used in the pigment compositions in accordance with the invention are, for example, the following structures: Cr/MgF₂/Al/MgF₂/Cr, pigments having this structure being sold under the name Chromaflair® by the company Flex; and other colour-variable pigments with MoS₂/SiO₂/Al/SiO₂/MoS₂, or Fe₂O₃/SiO₂/Al/SiO₂/Fe₂O₃ layers. Coloured aluminum pigments (Fe₂O₃/Al/Fe₂O₃) can also be used.

Examples of platelet-like substrates are natural micaceous iron oxide, synthetic and doped micaceous iron oxide, mica, basic lead carbonate, flaky barium sulfate, SiO₂, Al₂O₃, TiO₂, glass, ZnO, ZrO₂, SnO₂, BiOCI, chromium oxide, BN, MgO flakes, Si₃N₄, graphite, aluminum, titanium, aluminum alloys, bronzes, iron, organic flakes like copperphthaloycyanine, or 1,9 dichloroanthraquinone. Preferred substrates are mica, SiO₂ flakes, Al₂O₃ flakes, TiO₂ flakes, Fe₂O₃ flakes, BiOCI and glass flakes.

Preferably, the platelet-like substrate is selected from natural mica, especially muscovite mica, synthetic mica, especially fluorophlogopite, SiO₂ flakes, Al₂O₃ flakes, TiO₂ flakes, Fe₂O₃ flakes, BiOCI, glass flakes and metal flakes, especially aluminium flakes.

The term "mica" comprises natural mica, such as, for example, biotite, vermiculite, sericite, muscovite, phlogopite, fluorophlogopite, kaolinite or related as well as synthetic mica, such as, for example, synthetic fluorophlogopite.

Examples of suitable effect pigments are natural, or synthetic mica (muscovite, phlogopite, fluorophlogopite, synthetic fluorophlogopite, talc, kaolin) coated with one or more metals, metal oxides or metal sulfides; Al₂O₃ flakes coated with one or more metals, metal oxides or metal sulfides, metal platelets, such as aluminium platelets, metal platelets, such as aluminium, coated with one or more metal oxides, graphite platelets, SiO₂ flakes coated with one or more metals, metal oxides or metal sulfides, or TiO₂-flakes uncoated or coated with one or more metal oxides, glass platelets coated with one or more metals, metal oxides or metal sulfides, BiOCI, coated with one or more metals, metal oxides or metal sulfides, and ceramic platelets coated with one or more metals, metal oxides or metal sulfides,.

Preferably, the platelet-like substrate, especially transparent platelet-like substrate, is coated with one, or more layers of a metal oxide selected from TiO₂, ZrO₂, Fe₂O₃, Fe₃O₄, Cr₂O₃, ZnO, SnO₂, or mixtures of said metal oxides.

In a preferred embodiment the present invention is directed to pigment compositions comprising effect pigments on basis of natural, or synthetic mica; especially natural, or synthetic mica based pigments coated with TiO₂ and/or Fe₂O₃.

In another preferred embodiment the present invention is directed to pigment compositions comprising effect pigments on basis of aluminium flakes; especially aluminium flakes or aluminium based pigments coated with Fe₂O₃, or SiO₂/Fe₂O₃

Natural and synthetic mica is biological inert and consequently it is acceptable for a wide range of applications. The substrate mica consists of thin platelets having a thickness of about 300 to 600 nm and a defined particle size distribution.

Pearlescent pigments on basis of natural- or synthetic mica coated with a metal oxide such as iron oxide, titanium oxide or metals like nickel or silver etc. are disadvantageous in that their sparkling effect cannot be customized without using such expensive materials like borosilicate- or alumina based sparkling pigments.

In a preferred embodiment of the present invention the platelet-like substrate is muscovite, a natural mica. The muscovite mica has a thickness of about 300 to 600 nm and a defined particle size distribution.

In another preferred embodiment of the present invention the platelet-like substrate is synthetic mica. It is preferred that the synthetic mica be fluorophlogopite. The fluorophlogopite, KM₉₃AlSi₃O₁₀F₂, is exfoliated using a wet method process. Commercially available fluorophlogopite has typically an average thickness of 0.4 to 1.3 µm (microns) as determined by SEM measurement. Such wet process is described in Chinese patent publication CN1693200A. Chinese patent publication CN1693199A, is a related patent disclosing a method for precisely classifying mica powder synthesized by a wet method. Both patents are assigned to Sanbaoguangjing Mica Sci. & Tec.. The wet process refers to a production method that uses water as the medium in a number of steps. First, the mica powder is passed through a high pressure water pump to carry out hydraulic breaking, then a centrifuge for dewatering, followed by a roller mill for grinding and pulping. After the mica passes through the roller mill, the mica is fed into a classifying pool and finally into a drying stove or oven to be baked until moisture content of the mica is less than 1 %. The fluorophlogopite produced possesses positive characteristics of synthetic mica such as brightness, non-corrodibility and the absence of deleterious substances, e.g. Hg, Pb, As, etc. Other distinct quality characteristics include high purity, especially low Fe content (<0.2%).

The mica based pigment particles generally have medium diameters (D₅₀ (D (v,0.5)) in between 5 - 500 µm. The medium diameter is preferably in a range of from 10 - 300 µm, more preferably 10 - 150 µm. The mica based pigment particles are preferably either coated with titanium oxide and/or iron oxide.

For example, the size distribution of a mica-based pigment, which has a D₅₀ of 22 µm (microns) can be described as follows: 50 volume % of the platelets have a size up to and including 22 µm (microns).

In principle many size combinations between the perlite and the mica based substrates are possible.

The most common particle size distributions of effect pigments are if described with the d₅₀-value 10 µm, 15 µm, 20 µm, 30 µm, 50 µm, 100 µm and 150 µm.

In another preferred embodiment of the present invention the effect pigment is an aluminium pigment, an aluminium based pigment coated with (metal) oxides, like Fe₂O₃, TiO₂, Al₂O₃, SiO₂, or SiO₂/Fe₂O₃, a platelet-like copper phthalocyanine, a platelet-like 1,9-dichloroquinacridone, or a platelet-like 1,9-dichloroanthraquinone.

The other component of the sparkling pigment compositions of the present invention consists of perlite, which has been described in WO2009/007248 and WO2010/066605 (European patent application no. 08171357.0). By reducing the amount of 3D twin structure particles contained in milled expanded perlite, for example, by sedimentation, or centrifugation, to less than 5 % by weight, especially less than 3 % by weight, very especially less than 1 % by weight, the matting effect of the 3D twin structure particles is reduced, which in turn leads to better colour homogeneity in all kind of applications.

The platelet-like perlite particles generally have a length of from 2 µm to 5 mm, a width of from 2 µm to 2 mm, and an average thickness of less than 4 µm, and a ratio of length to thickness of at least 5:1, having two substantially parallel faces, the distance between which is the shortest axis of the particles. Preferably medium particle sizes of less than 150 µm and more than 5 µm are used.

Perlite is a hydrated natural glass containing typically about 72-75% SiO₂, 12-14% Al₂O₃, 0.5-2% Fe₂O₃, 3-5 % Na₂O, 4-5% K₂O, 0.4-1.5% CaO (by weight), and small concentrations of other metallic elements. Perlite is distinguished from other natural glasses by a higher content (2-10% by weight) of chemically bonded water, the presence of a vitreous, pearly luster, and characteristic concentric or arcuate onion skin-like (i.e., perlitic) fractures. Perlite flakes may be prepared by methods disclosed in WO02/11882 which may include milling, screening, and thermal expansion. Perlite flakes with controlled particle size distribution, low floater content, and high blue light brightness are preferred.

The perlite flakes have a floater content of less than 10 percent by volume; especially a floater content of less than 5 percent by volume; very especially a floater content of less than 2 percent by volume. The perlite flakes have a blue light brightness greater than 80; especially greater than 82; very especially greater than 85.

The perlite flakes used in the present invention are not of a uniform shape. The particles are not always perfectly flat, i.e. can be concave. Nevertheless, for purposes of brevity, the perlite flakes will be referred to as having a "diameter". The perlite flakes have an average thickness of < 2 µm, especially of from 200 to 1000 nm, very especially from 200 to 600 nm. It is presently preferred that the diameter (median particle size (d₅₀)) of the flakes be in a preferred range of about 10-50 µm with a more preferred range of about 20-40 µm.

The Fe₂O₃ content of the perlite is preferably below 2 %, especially 0 %.

The at present most preferred perlite is Optimat™ 2550 (World Minerals). Perlites, like Optimat™ 1735 (World Minerals), Perlite # 000 (Whittemore Company Inc.), Super Perlite T100 (PVP Corp.), Harborlite® 200 (World Minerals), Dicalite™ 416 (Dicalite, Dicaperl Minerals, Inc), and Celatom™ CP600 (EP Minerals, LLC.) could also be used. Particles having a particle size below 5 µm and above 85 µm and/or 3D twin structure particles are removed, for example, by sedimentation, or centrifugation.

The present invention allows to customize the sparkling behaviour of a given particle size distribution of a mica based pigment and adjust the sparkling effect of that pigment by adding 0.5 to 80 % by weight, especially 2 - 50 % by weight of perlite based on the sum of perlite and mica based pigment.

In principle different families of particle size distributions of mica based pigments and perlite can be combined. Mica based pigments and perlite having extremely different sizes can be combined. For example, the smooth sparkling appearance of a mica based pigment with a medium particle size of 15 µm can modified with small amounts of perlite with a medium particle size of 100 µm. Alternatively mica based pigments with a medium particle size of 100 µm can modified with small amounts of perlite with a medium particle size of 15 µm.

In a preferred embodiment of the present invention, mica based pigments and perlite having similar particle sizes are combined. For example, mica based pigments with a medium particle size of 12 to 30 µm, such as, for example, ca. 12 µm, ca. 15 µm, ca. 20 µm, ca. 25 µm, or ca. 30 µm, can be combined with perlite with a medium particle size of 12 to 30 µm, such as, for example, ca. 15 µm, ca. 17 µm, ca. 20 µm, ca. 25 µm, or ca. 30 µm.

If, for example, a mica based pigment, especially a Fe₂O₃ coated mica substrate, with a d₅₀ of ca. 20 µm and red color is combined with a perlite with a d₅₀ of ca. 25 µm the sparkling intensity at higher illumination angles is increasing strongly if 2 - 30 % by weight perlite is added. The best effect is achieved by adding 4 - 15 % by weight of perlite. Reference is made to Fig. 1.

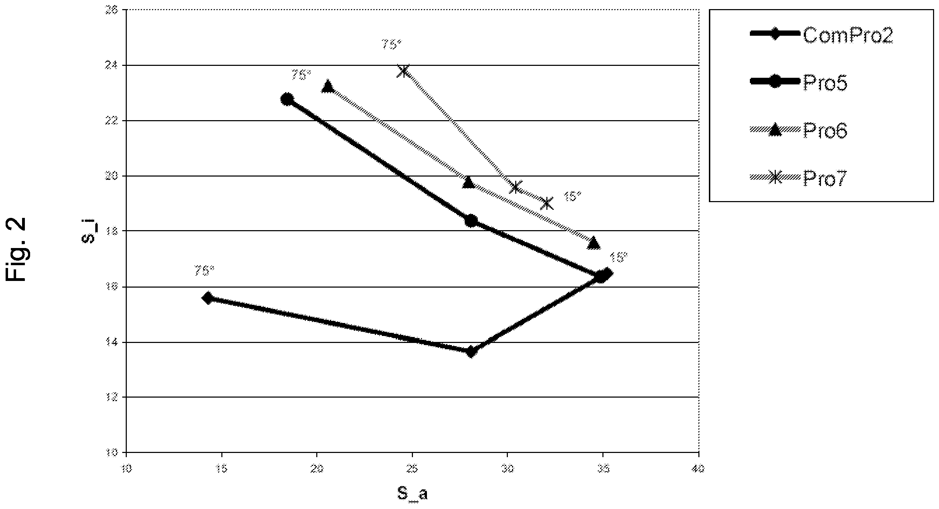

If, for example, a synthetic mica based pearl pigment, especially a TiO₂ coated synthetic mica substrate, with a d₅₀ of ca. 20 µm is combined with a perlite of similar size the sparkling intensity at higher illumination angles is increasing strongly if 2 - 50 % by weight perlite is added. The best effect is achieved by adding 4 - 15 % by weight of perlite. Reference is made to Fig. 2.

In other preferred embodiments of the present invention, mica based pigments and perlite having different particle sizes are combined. If, for example, a synthetic mica based pigment, especially a TiO₂ coated synthetic mica substrate, with a d₅₀ of ca. 45 µm is combined with a perlite with a d₅₀ of ca. 25 µm the sparkling intensity at higher illumination angles is increasing strongly if 5 - 50 % by weight perlite is added. The best effect is achieved by adding 5 - 20 % by weight of perlite.

If, for example, a synthetic mica based pigment, especially a TiO₂ coated synthetic mica substrate, with a d₅₀ of ca. 12 µm is combined with a perlite with a d₅₀ of ca. 17.5 µm the sparkling intensity at higher illumination angles is increasing strongly if 10 - 40 % by weight perlite pigment is added.

From a colouristic view the following blends are advantageous: If the medium particle size of the light reflecting effect pigment is x µm the medium particle size of the perlite to be added should be x µm +/- 25%.

In a further particularly preferred embodiment of the present invention the pigment composition comprises a TiO₂ coated aluminum oxide flake. The addition of 5 - 30 % perlite further enhances the sparkling effect.

Also preferred is a mixture of perlite with aluminum pigments of the silver dollar or cornflake type. The mixtures containing 5 - 30 % Perlite show much stronger sparkle effect than the original pigments without perlite.

Also preferred is the combination of perlite with opaque, colored flakes like iron oxide coated aluminum flakes of the silver dollar or cornflake type.

Also preferred are combinations of perlite with metal oxide coated, transparent substrates like natural or synthetic mica, or glass with oxide films that cause interference colors. The addition of 5 - 30 % perlite causes stronger sparkle effects especially at steeper angles.

The choice of the mica and perlite components depends on desired design.

The coatings on the substrates consist preferably of TiO₂ and/or Fe₂O₃, or TiO₂, Fe₂O₃ and/or SiO₂ (TiO₂, Fe₂O₃, TiO₂ & Fe₂O₃, TiO₂/SiO₂/TiO₂, Fe₂O₃/SiO₂/Fe₂O₃, TiO₂/SiO₂/Fe₂O₃, Fe₂O₃/SiO₂/TiO₂ and TiO₂ & Fe₂O₃/SiO₂/TiO₂). Doping agents like SnO₂ and surface treatments like silanes or silica might also be present. Metallized substrates like Ni- or Ag coated transparent flakes are also possible. The blending options depend on styling intention.

The pigment compositions can comprise more than one effect pigment. The pigment compositions of the present invention with sparkle effect can be manufactured via dry blending of (metal) oxide(s) and/or metal-coated substrates (synthetic or natural) and perlite.

Accordingly the present invention is directed to a process for the production of the pigment compositions of the present invention, comprising blending of an effect pigment, such as, for example, a dielectric material and/or metal coated platelet-like substrate of mica with a platelet-like perlite.

The substrates can be coated in various ways.

Suitable metals for the (semi-transparent) metal layer are, for example, Cr, Ti, Mo, W, Al, Cu, Ag, Au, or Ni. The semi-transparent metal layer has typically a thickness of between 5 and 25 nm, especially between 5 and 15 nm.

According to the present invention the term "aluminum" comprises aluminum and alloys of aluminum. Alloys of aluminum are, for example described in G. Wassermann in Ullmanns Enzyklopadie der Industriellen Chemie, 4. Auflage, Verlag Chemie, Weinheim, Band 7, S. 281 to 292. Especially suitable are the corrosion stable aluminum alloys described on page 10 to 12 of WO00/12634, which comprise besides of aluminum silicon, magnesium, manganese, copper, zinc, nickel, vanadium, lead, antimony, tin, cadmium, bismuth, titanium, chromium and/or iron in amounts of less than 20 percent by weight, preferably less than 10 percent by weight.

The metal layer can be obtained by wet chemical coating or by chemical vapor deposition, for example, gas phase deposition of metal carbonyls. The substrate is suspended in an aqueous and/or organic solvent containing medium in the presence of a metal compound and is deposited onto the substrate by addition of a reducing agent. The metal compound is, for example, silver nitrate or nickel acetyl acetonate (WO03/37993).

According to US-B-3,536,520 nickel chloride can be used as metal compound and hypophosphite can be used as reducing agent. According to EP-A-353544 the following compounds can be used as reducing agents for the wet chemical coating: aldehydes (formaldehyde, acetaldehyde, benzalaldehyde), ketones (acetone), carbonic acids and salts thereof (tartaric acid, ascorbinic acid), reductones (isoascorbinic acid, triosereductone, reductine acid), and reducing sugars (glucose). However, it is also possible to use reducing alcohols (allyl alcohol), polyols and polyphenols, sulfites, hydrogensulfites, dithionites, hypophosphites, hydrazine, boron nitrogen compounds, metal hydrides and complex hydrides of aluminium and boron. The deposition of the metal layer can furthermore be carried out with the aid of a CVD method. Methods of this type are known. Fluidised-bed reactors are preferably employed for this purpose. EP-A-0741170 describes the deposition of aluminium layers by reduction of alkylaluminium compounds using hydrocarbons in a stream of inert gas. The metal layers can furthermore be deposited by gas-phase decomposition of the corresponding metal carbonyls in a heatable fluidised-bed reactor, as described in EP-A-045851. Further details on this method are given in WO93/12182. A further process for the deposition of thin metal layers, which can be used in the present case for the application of the metal layer to the substrate, is the known method for vapour deposition of metals in a high vacuum. It is described in detail in Vakuum-Beschichtung [Vacuum Coating], Volumes 1-5; Editors Frey, Kienel and Lobl, VDI-Verlag, 1995. In the sputtering process, a gas discharge (plasma) is ignited between the support and the coating material, which is in the form of plates (target). The coating material is bombarded with high-energy ions from the plasma, for example argon ions, and thus removed or atomised. The atoms or molecules of the atomised coating material are precipitated on the support and form the desired thin layer. The sputtering process is described in Vakuum-Beschichtung [Vacuum Coating], Volumes 1- 5; Editors Frey, Kienel and Lobl, VDI-Verlag, 1995. For use in outdoor applications, in particular in the application in vehicle paints, the pigments can be provided with an additional weather-stabilising protective layer, the so-called post-coating, which simultaneously effects optimum adaptation to the binder system. Post-coatings of this type have been described, for example, in EP-A-0268918 and EP-A-0632109.

If pigments with stronger metallic appearance are desired, the thickness of the metal layer is greater than 25 nm to 100 nm, preferably 30 to 50 nm. If pigments with colored metal effects are desired, additional layers of colored or colorless metal oxides, metal nitrides, metal sulfides and/or metals can be deposited. These layers are transparent or semi-transparent. It is preferred that layers of high index of refraction and layers of low index of refraction alternate or that one layer is present, wherein within the layer the index of refraction is gradually changing. It is possible for the weathering resistance to be increased by means of an additional coating, which at the same time causes an optimal adaption to the binder system (EP-A-268918 and EP-A-632109).

The metal and/or metal oxide coated flakes can be, as described in WO06/131472, treated with a plasma torch. The treatment promotes, for example, uniform crystallinity and/or coating densification. The rapid melting and solidification for certain particles can provide enhanced properties associated with the metal and/or metal oxide coating such as barrier properties, binding properties and crystalline surface formation. The short residence times in the reaction zones allow for rapid treatments. Further the processing conditions can be adjusted to selectively melt and resolidificate and crystallize the surface and near surface of the particles. Moreover, surface leveling can be achieved which results in a uniform surface with minimal defects. Among other things, this may help to avoid agglomeration of particles.

The process comprises (A) providing coated flakes,
(B) entraining said coated flakes in a stream of gas for transport to a plasma torch;
(C) creating a plasma in said stream of gas to heat the outer surface of the coated flakes;
(D) permitting said coated flakes to cool; and (E) collecting said coated flakes.

The plasma torch is preferably an induction plasma torch. The preferred induction plasma torches for use in the process of the present invention are available from Tekna Plasma Systems, Inc. of Sherbrooke, Quebec, Canada. Boulos et al., see US-A-5,200,595, its teachings relative to the construction and operation of plasma induction torches.

In one preferred embodiment of the present invention, the pigments comprise on the substrate
(a) a dielectric layer,
(b) a metal layer, and
(c) a dielectric layer. Such pigments have high infrared reflectivity and high visible transmission.

Preferably, metallic silver is used as the metal layer because it offers high reflectivity to infrared radiation together with high transmission to solar radiation providing its reflection losses are minimized. Although high purity metallic silver films are preferred, certain impurities and/or alloying metals can be tolerated as long as they do not significantly reduce the infrared reflectivity or significantly increase the visible absorptivity. The thickness of the metallic silver layer is within a range of from 3 to 20 nm.

Suitable materials for layer (c) are materials which are transparent to solar and infrared radiation in the thicknesses used. Additionally, these materials serve as anti-reflection coatings to minimize the reflection of visible light by the silver layer, and these materials preferably have high indices of refraction. Some suitable materials for layer (c) include, but are not limited to, titanium dioxide, silicon dioxide, silicon monoxide, bismuth oxide, tin oxide, indium oxide, chromium oxide, zinc sulfide and magnesium fluoride. Titanium dioxide is a preferred material because of its high refractive index and because it has been found to have minimum interdiffusion with silver.

Suitable materials for layer (a) are transparent materials which cooperate with layer (b) to minimize visible light reflection losses by the silver layer. The transparent materials suitable for layer (c) are also suitable for layer (a), and titanium dioxide is also a preferred material for this layer. Layer (a) can be formed from the same material as layer (c), or from a different material in which case it would probably have a different thickness.

The thicknesses for layer (c) and layer (a) are chosen to maximize solar transmission and infrared reflectivity. It has been found that a thickness of from about 15 to about 50 nm is suitable for layer (c). The thickness of layer (a) is then chosen based upon a number of considerations such as whether it is desired to achieve the optimum solar transmission, the optimum ratio of transmission to thermal reflectivity or some combination between these optimized values.

In most cases, the optical properties desired can be achieved by choosing a thickness of layer of between about 15 nm and about 50 nm.

In one preferred embodiment of the present invention, the effect pigments comprise materials having a "high" index of refraction, which is defined herein as an index of refraction of greater than about 1.65, and optionally materials having a "low" index of refraction, which is defined herein as an index of refraction of about 1.65 or less. Various (dielectric) materials that can be utilized including inorganic materials such as metal oxides, metal suboxides, metal fluorides, metal oxyhalides, metal sulfides, metal chalcogenides, metal nitrides, metal oxynitrides, metal carbides, combinations thereof, and the like, as well as organic dielectric materials. These materials are readily available and easily applied by physical, or chemical vapor deposition processes, or by wet chemical coating processes.

Optionally a SiO₂ layer can be arranged between the substrate and the materials having a "high" index of refraction. By applying a SiO₂ layer on a perlite, mica, or glass substrate the surface thereof is protected against chemical alteration, such as, for example, swelling and leaching of perlite, mica, or glass components. The thickness of the SiO₂ layer is in the range of 5 to 200 nm, especially 20 to 150 nm. The SiO₂ layer is preferably prepared by using an organic silane compound, such as tetraethoxy silane (TEOS). The SiO₂ layer can be replaced by thin layers (thickness 1 to 20 nm) of Al₂O₃, Fe₂O₃ or ZrO₂.

Furthermore, the SiO₂-coated, or TiO₂-coated flakes may, as described in EP-A-0 982 376, be coated with a nitrogen-doped carbon layer. The process described in EP-A-0 982 376 comprises the following steps:
(a) suspending the SiO₂, or TiO₂ coated flakes in a liquid,
(b) where appropriate adding a surface-modifier and/or a polymerization catalyst,
(c) before or after step (b), adding one or more polymers comprising nitrogen and carbon atoms, or one or more monomers capable of forming such polymers,
(d) forming a polymeric coating on the surface of the flakes,
(e) isolating the coated flakes and
(f) heating the coated flakes to a temperature of from 100 to 600°C in a gaseous atmosphere.

The polymer may be a polypyrrole, a polyamide, a polyaniline, a polyurethane, a nitrile rubber or a melamine-formaldehyde resin, preferably a polyacrylonitrile, or the monomer is a pyrrole derivative, an acrylonitrile, a methacrylonitrile, a crotonitrile, an acrylamide, a methacrylamide or a crotonamide, preferably an acrylonitrile, methacrylonitrile or crotonitrile, most preferably an acrylonitrile.

Preferably, the flakes are heated in step (f) initially to from 100°C to 300°C in an oxygen-containing atmosphere and then to from 200 to 600°C in an inert gas atmosphere.

The present invention therefore relates also to pigments based on flakes comprising over the entire surface of the silicon oxide, or titanium oxide coated flakes a layer consisting of from 50 to 95 % by weight carbon, from 5 to 25 % by weight nitrogen and from 0 to 25 % by weight of the elements hydrogen, oxygen and/or sulfur, the percentage by weight data relating to the total weight of the layer (PAN).

The thickness of the nitrogen-doped carbon layer is generally from 10 to 150 nm, preferably from 30 to 70 nm. In said embodiment preferred pigments have the following layer structure:
substrate/TiO₂/PAN, substrate/TiO₂/PAN/TiO₂, substrate/TiO₂/PAN/SiO₂/PAN.

In an especially preferred embodiment, the interference pigments on the basis of the substrate comprise a layer of a dielectric material having a "high" refractive index, that is to say a refractive index greater than about 1.65, preferably greater than about 2.0, most preferred greater than about 2.2, which is applied to the entire surface of the perlite/mica substrate. Examples of such a dielectric material are zinc sulfide (ZnS), zinc oxide (ZnO), zirconium oxide (ZrO₂), titanium dioxide (TiO₂), carbon, indium oxide (In₂O₃), indium tin oxide (ITO), tantalum pentoxide (Ta₂O₅), chromium oxide (Cr₂O₃), cerium oxide (CeO₂), yttrium oxide (Y₂O₃), europium oxide (Eu₂O₃), iron oxides such as iron(II)/iron(III) oxide (Fe₃O₄) and iron(III) oxide (Fe₂O₃), hafnium nitride (HfN), hafnium carbide (HfC), hafnium oxide (HfO₂), lanthanum oxide (La₂O₃), magnesium oxide (MgO), neodymium oxide (Nd₂O₃), praseodymium oxide (Pr₆O₁₁), samarium oxide (Sm₂O₃), antimony trioxide (Sb₂O₃), silicon monoxides (SiO), selenium trioxide (Se₂O₃), tin oxide (SnO₂), tungsten trioxide (WO₃), or combinations thereof. The dielectric material is preferably a metal oxide. It being possible for the metal oxide to be a single oxide or a mixture of oxides, with or without absorbing properties, for example, TiO₂, ZrO₂, Fe₂O₃, Fe₃O₄, Cr₂O₃, SnO₂, or ZnO, with TiO₂ being especially preferred.

It is possible to obtain pigments that are more intense in colour and more transparent by applying, on top of the TiO₂ layer, a metal oxide of low refractive index, such as SiO₂, Al₂O₃, AIOOH, B₂O₃ or a mixture thereof, preferably SiO₂, and optionally applying a further TiO₂ layer on top of the latter layer (EP-A-892832, EP-A-753545, WO93/08237, WO98/53011, WO9812266, WO9838254, WO99/20695, WO00/42111, and EP-A-1213330). Nonlimiting examples of suitable low index dielectric materials that can be used include silicon dioxide (SiO₂), aluminum oxide (Al₂O₃), and metal fluorides such as magnesium fluoride (MgF₂), aluminum fluoride (AlF₃), cerium fluoride (CeF₃), lanthanum fluoride (LaF₃), sodium aluminum fluorides (e.g., Na₃AlF₆ or Na₅Al₃F₁₄), neodymium fluoride (NdF3), samarium fluoride (SmF₃), barium fluoride (BaF₂), calcium fluoride (CaF₂), lithium fluoride (LiF), combinations thereof, or any other low index material having an index of refraction of about 1.65 or less. For example, organic monomers and polymers can be utilized as low index materials, including dienes or alkenes such as acrylates (e.g., methacrylate), polymers of perfluoroalkenes, polytetrafluoroethylene (TEFLON), polymers of fluorinated ethylene propylene (FEP), parylene, p-xylene, combinations thereof, and the like. Additionally, the foregoing materials include evaporated, condensed and cross-linked transparent acrylate layers, which may be deposited by methods described in US-B-5,877,895.

Accordingly, preferred interference pigments comprise besides (a) a metal oxide of high refractive index in addition (b) a metal oxide of low refractive index, wherein the difference of the refractive indices is at least 0.1.

Pigments on the basis of platelet-like substrates (flakes), which have been coated by a wet chemical method, in the indicated order are particularly preferred:
TiO₂, (SnO₂)TiO₂ (substrate; layer: (SnO₂)TiO₂, preferably in the rutile modification), titanium suboxide, TiO₂/titanium suboxide, Fe₂O₃, Fe₃O₄, TiFe₂O₅, Cr₂O₃, ZrO₂, Sn(Sb)O₂, BiOCl, Al₂O₃, Ce₂S₃, MoS₂, Fe₂O₃●TiO₂ (substrate; mixed layer of Fe₂O₃ and TiO₂), TiO₂/Fe₂O₃ (substrate; first layer: TiO₂; second layer: Fe₂O₃), TiO₂/Berlin blau, TiO₂/Cr₂O₃, or TiO₂/FeTiO₃. In general the layer thickness ranges from 1 to 1000 nm, preferably from 1 to 300 nm.
In another particularly preferred embodiment the present invention relates to interference pigments containing at least three alternating layers of high and low refractive index, such as, for example, TiO₂/SiO₂/TiO₂, (SnO₂)TiO₂/SiO₂/TiO₂, TiO₂/SiO₂/TiO₂/SiO₂/TiO₂, Fe₂O₃/SiO₂/TiO₂, or TiO₂/SiO₂/Fe₂O₃.
Preferably the layer structure is as follows:
(a) a coating having a refractive index > 1.65,
(b) a coating having a refractive index ≤ 1.65,
(c) a coating having a refractive index > 1.65, and
(d) optionally an outer protective layer.

The thickness of the individual layers of high and low refractive index on the base substrate is essential for the optical properties of the pigment. The thickness of the individual layers, especially metal oxide layers, depends on the field of use and is generally 10 to 1000 nm, preferably 15 to 800 nm, in particular 20 to 600 nm.

The thickness of layer (A) is 10 to 550 nm, preferably 15 to 400 nm and, in particular, 20 to 350 nm. The thickness of layer (B) is 10 to 1000 nm, preferably 20 to 800 nm and, in particular, 30 to 600 nm. The thickness of layer (C) is 10 to 550 nm, preferably 15 to 400 nm and, in particular, 20 to 350 nm.

Particularly suitable materials for layer (A) are metal oxides, metal sulfides, or metal oxide mixtures, such as TiO₂, Fe₂O₃, TiFe₂O₅, Fe₃O₄, BiOCI, CoO, Co₃O₄, Cr₂O₃, VO₂, V₂O₃, Sn(Sb)O₂, SnO₂, ZrO₂, iron titanates, iron oxide hydrates, titanium suboxides (reduced titanium species having oxidation states from 2 to <4), bismuth vanadate, cobalt aluminate, and also mixtures or mixed phases of these compounds with one another or with other metal oxides. Metal sulfide coatings are preferably selected from sulfides of tin, silver, lanthanum, rare earth metals, preferably cerium, chromium, molybdenum, tungsten, iron, cobalt and/or nickel.

Particularly suitable materials for layer (B) are metal oxides or the corresponding oxide hydrates, such as SiO₂, MgF₂, Al₂O₃, AIOOH, B₂O₃ or a mixture thereof, preferably SiO₂.

Particularly suitable materials for layer (C) are colorless or colored metal oxides, such as TiO₂, Fe₂O₃, TiFe₂O₅, Fe₃O₄, BiOCI, CoO, Co₃O₄, Cr₂O₃, VO₂, V₂O₃, Sn(Sb)O₂, SnO₂, ZrO₂, iron titanates, iron oxide hydrates, titanium suboxides (reduced titanium species having oxidation states from 2 to <4), bismuth vanadate, cobalt aluminate, and also mixtures or mixed phases of these compounds with one another or with other metal oxides. The TiO₂ layers can additionally contain an absorbing material, such as carbon, selectively absorbing colorants, selectively absorbing metal cations, can be coated with absorbing material, or can be partially reduced.

Interlayers of absorbing or nonabsorbing materials can be present between layers (A), (B), (C) and (D). The thickness of the interlayers is 1 to 50 nm, preferably 1 to 40 nm and, in particular, 1 to 30 nm. Such an interlayer can, for example, consist of SnO₂. It is possible to force the rutile structure to be formed by adding small amounts of SnO₂ (see, for example, WO93/08237).

In this embodiment preferred interference pigments have the following layer structure:

| | | | |
|---|---|---|---|
| TRASUB | TiO₂ | SiO₂ | TiO₂ |
| TRASUB | TiO₂ | SiO₂ | Fe₂O₃ |
| TRASUB | TiO₂ | SiO₂ | TiO₂•Fe₂O₃ |
| TRASUB | TiO₂ | SiO₂ | (Sn,Sb)O₂ |
| TRASUB | (Sn,Sb)O₂ | SiO₂ | TiO₂ |
| TRASUB | Fe₂O₃ | SiO₂ | (Sn,Sb)O₂ |
| TRASUB | TiO₂•Fe₂O₃ | SiO₂ | TiO₂•Fe₂O₃ |
| TRASUB | TiO₂ | SiO₂ | MoS₂ |
| TRASUB | TiO₂ | SiO₂ | Cr₂O₃ |
| TRASUB | Cr₂O₃ | SiO₂ | TiO₂ |
| TRASUB | Fe₂O₃ | SiO₂ | TiO₂ |
| TRASUB | TiO₂ | Al₂O₃ | TiO₂ |
| TRASUB | Fe₂TiO₅ | SiO₂ | TiO₂ |
| TRASUB | TiO₂ | SiO₂ | Fe₂TiO₅/ TiO₂ |
| TRASUB | TiO suboxides | SiO₂ | TiO suboxides |
| TRASUB | TiO₂ | SiO₂ | TiO₂/SiO₂/TiO₂ + Prussian Blue |
| TRASUB | TiO₂ | SiO₂ | TiO₂/SiO₂/TiO₂ |
| TRASUB | TiO₂/SiO₂/TiO₂ | SiO₂ | TiO₂/SiO₂/TiO₂ |
| TRASUB | (SnO₂)TiO₂ | SiO₂ | (SnO₂)TiO₂ |

| | | | |
|---|---|---|---|
| wherein TRASUB is a transparent substrate having a low index of refraction selected from the group consisting of natural, or synthetic mica, another layered silicate, glass, Al₂O₃, or SiO₂. | | | |

The metal oxide layers can be applied by CVD (chemical vapour deposition) or by wet chemical coating. The metal oxide layers can be obtained by decomposition of metal carbonyls in the presence of water vapour (relatively low molecular weight metal oxides such as magnetite) or in the presence of oxygen and, where appropriate, water vapour (e.g. nickel oxide and cobalt oxide). The metal oxide layers are especially applied by means of oxidative gaseous phase decomposition of metal carbonyls (e.g. iron pentacarbonyl, chromium hexacarbonyl; EP-A-45 851), by means of hydrolytic gaseous phase decomposition of metal alcoholates (e.g. titanium and zirconium tetra-n- and -iso-propanolate; DE-A-41 40 900) or of metal halides (e.g. titanium tetrachloride; EP-A-338 428), by means of oxidative decomposition of organyl tin compounds (especially alkyl tin compounds such as tetrabutyltin and tetramethyltin; DE-A-44 03 678) or by means of the gaseous phase hydrolysis of organyl silicon compounds (especially di-tert-butoxyacetoxysilane) described in EP-A-668 329, it being possible for the coating operation to be carried out in a fluidised-bed reactor (EP-A-045 851 and EP-A-106 235). Al₂O₃ layers (B) can advantageously be obtained by controlled oxidation during the cooling of aluminium-coated pigments, which is otherwise carried out under inert gas (DE-A-195 16 181).

Phosphate-, chromate- and/or vanadate-containing and also phosphate- and SiO₂-containing metal oxide layers can be applied in accordance with the passivation methods described in DE-A-42 36 332 and in EP-A-678 561 by means of hydrolytic or oxidative gaseous phase decomposition of oxide-halides of the metals (e.g. CrO₂Cl₂, VOCl₃), especially of phosphorus oxyhalides (e.g. POCl₃), phosphoric and phosphorous acid esters (e.g. di- and tri-methyl and di- and tri-ethyl phosphite) and of amino-group-containing organyl silicon compounds (e.g. 3-aminopropyl-triethoxy- and -trimethoxy-silane).

Layers of oxides of the metals zirconium, titanium, iron and zinc, oxide hydrates of those metals, iron titanates, titanium suboxides or mixtures thereof are preferably applied by precipitation by a wet chemical method, it being possible, where appropriate, for the metal oxides to be reduced. In the case of the wet chemical coating, the wet chemical coating methods developed for the production of pearlescent pigments may be used; these are described, for example, in DE-A-14 67 468, DE-A-19 59 988, DE-A-20 09 566, DE-A-22 14 545, DE-A-22 15 191, DE-A-22 44 298, DE-A-23 13 331, DE-A-25 22 572, DE-A-31 37 808, DE-A-31 37 809, DE-A-31 51 343, DE-A-31 51 354, DE-A-31 51 355, DE-A-32 11 602 and DE-A-32 35 017, DE 195 99 88, WO 93/08237, WO 98/53001 and WO03/6558.

The metal oxide of high refractive index is preferably TiO₂ and/or iron oxide, and the metal oxide of low refractive index is preferably SiO₂. Layers of TiO₂ can be in the rutile or anastase modification, wherein the rutile modification is preferred. TiO₂ layers can also be reduced by known means, for example ammonia, hydrogen, hydrocarbon vapor or mixtures thereof, or metal powders, as described in EP-A-735,114, DE-A-3433657, DE-A-4125134, EP-A-332071, EP-A-707,050, WO93/19131, or WO06/131472.

For the purpose of coating, the substrate particles are suspended in water and one or more hydrolysable metal salts are added at a pH suitable for the hydrolysis, which is so selected that the metal oxides or metal oxide hydrates are precipitated directly onto the particles without subsidiary precipitation occurring. The pH is usually kept constant by simultaneously metering in a base. The pigments are then separated off, washed, dried and, where appropriate, calcinated, it being possible to optimise the calcinating temperature with respect to the coating in question. If desired, after individual coatings have been applied, the pigments can be separated off, dried and, where appropriate, calcinated, and then again re-suspended for the purpose of precipitating further layers.

The metal oxide layers are also obtainable, for example, in analogy to a method described in DE-A-195 01 307, by producing the metal oxide layer by controlled hydrolysis of one or more metal acid esters, where appropriate in the presence of an organic solvent and a basic catalyst, by means of a sol-gel process. Suitable basic catalysts are, for example, amines, such as triethylamine, ethylenediamine, tributylamine, dimethylethanolamine and methoxypropylamine. The organic solvent is a water-miscible organic solvent such as a C₁₋₄alcohol, especially isopropanol.

Suitable metal acid esters are selected from alkyl and aryl alcoholates, carboxylates, and carboxyl-radical- or alkyl-radical- or aryl-radical-substituted alkyl alcoholates or carboxylates of vanadium, titanium, zirconium, silicon, aluminium and boron. The use of triisopropyl aluminate, tetraisopropyl titanate, tetraisopropyl zirconate, tetraethyl orthosilicate and triethyl borate is preferred. In addition, acetylacetonates and acetoacetylacetonates of the afore-mentioned metals may be used. Preferred examples of that type of metal acid ester are zirconium acetylacetonate, aluminium acetylacetonate, titanium acetylacetonate and diisobutyloleyl acetoacetylaluminate or diisopropyloleyl acetoacetylacetonate and mixtures of metal acid esters, for example Dynasil® (Hüls), a mixed aluminium/silicon metal acid ester.

As a metal oxide having a high refractive index, titanium dioxide is preferably used, the method described in US-B-3,553,001 being used, in accordance with an embodiment of the present invention, for application of the titanium dioxide layers.

An aqueous titanium salt solution is slowly added to a suspension of the material being coated, which suspension has been heated to about 50-100°C, especially 70-80°C, and a substantially constant pH value of about from 0.5 to 5, especially about from 1.2 to 2.5, is maintained by simultaneously metering in a base such as, for example, aqueous ammonia solution or aqueous alkali metal hydroxide solution. As soon as the desired layer thickness of precipitated TiO₂ has been achieved, the addition of titanium salt solution and base is stopped. Addition of a precursor for Al₂O₃ or MgO in the starting solutions is a way for improving the morphology of the TiO₂ layer.

This method, also referred to as the "titration method", is distinguished by the fact that an excess of titanium salt is avoided. That is achieved by feeding in for hydrolysis, per unit time, only that amount which is necessary for even coating with the hydrated TiO₂ and which can be taken up per unit time by the available surface of the particles being coated. In principle, the anatase form of TiO₂ forms on the surface of the starting pigment. By adding small amounts of SnO₂, however, it is possible to force the rutile structure to be formed. For example, as described in WO 93/08237, tin dioxide can be deposited before titanium dioxide precipitation and the product coated with titanium dioxide can be calcined at from 800 to 900°C.

In an especially preferred embodiment of the present invention the mica flakes are mixed with distilled water in a closed reactor and heated at about 90 °C. The pH is set to about 1.8 to 2.2 and a preparation comprising TiOCl₂, HCI, glycine and distilled water is added slowly while keeping the pH constant (1.8 to 2.2) by continuous addition of 1M NaOH solution. Reference is made to WO08/104467. By adding an amino acid, such as glycine, during the deposition of the TiO₂ it is possible to improve the quality of the TiO₂ coating to be formed. Advantageously, a preparation comprising TiOCl₂, HCI, and glycine and distilled water is added to the substrate flakes in water.

The TiO₂ can optionally be reduced by usual procedures: US-B-4,948,631 (NH₃, 750-850 °C), WO93/19131 (H₂, > 900 °C) or DE-A-19843014 (solid reduction agent, such as, for example, silicon, > 600 °C).

Where appropriate, an SiO₂ (protective) layer can be applied on top of the titanium dioxide layer, for which the following method may be used: A soda waterglass solution is metered into a suspension of the material being coated, which suspension has been heated to about 50-100°C, especially 70-80°C. The pH is maintained at from 4 to 10, preferably from 6.5 to 8.5, by simultaneously adding 10 % hydrochloric acid. After addition of the waterglass solution, stirring is carried out for 30 minutes.

It is possible to obtain pigments that are more intense in colour and more transparent by applying, on top of the TiO₂ layer, a metal oxide of "low" refractive index, that is to say a refractive index smaller than about 1.65, such as SiO₂, Al₂O₃, AIOOH, B₂O₃ or a mixture thereof, preferably SiO₂, and applying a further Fe₂O₃ and/or TiO₂ layer on top of the latter layer. Such multicoated interference pigments comprising a substrate and alternating metal oxide layers of with high and low refractive index can be prepared in analogy to the processes described in WO98/53011 and WO99/20695.

It is, in addition, possible to modify the powder colour of the pigment by applying further layers such as, for example, coloured metal oxides or Berlin Blue, compounds of transition metals, e.g. Fe, Cu, Ni, Co, Cr, or organic compounds such as dyes or colour lakes.

In addition, the pigment according to the invention can also be coated with poorly soluble, firmly adhering, inorganic or organic colourants. Preference is given to the use of colour lakes and, especially, aluminium colour lakes. For that purpose an aluminium hydroxide layer is precipitated, which is, in a second step, laked by using a colour lake (DE-A-24 29 762 and DE-A-29 28 287).

Furthermore, the pigment according to the invention may also have an additional coating with complex salt pigments, especially cyanoferrate complexes (EP-A-141 173 and DE-A-23 13 332).

To enhance the weather and light stability the interference pigments can be, depending on the field of application, subjected to a surface treatment. Useful surface treatments are, for example, described in DE-A-2215191, DE-A-3151354, DE-A-3235017, DE-A-3334598, DE-A-4030727, EP-A-649886, WO97/29059, WO99/57204, and US-A-5,759,255. Said surface treatment might also facilitate the handling of the pigment, especially its incorporation into various application media.

In a preferred embodiment of the present invention is directed to pigments which contain a substrate and comprise a mixed layer of Al₂O₃/TiO₂. The mixed layer can contain up to 20 mol % Al₂O₃. The mixed layer of Al₂O₃/TiO₂ is obtained by slowly adding an aqueous aluminum and titanium salt solution to a suspension of the material being coated, which suspension has been heated to about 50-100°C, especially 70-80°C, and maintaining a substantially constant pH value of about from 0.5 to 5, especially about from 1.2 to 2.5, by simultaneously metering in a base such as, for example, aqueous ammonia solution or aqueous alkali metal hydroxide solution. As soon as the desired layer thickness of precipitated Al₂O₃/TiO₂ has been achieved, the addition of titanium and aluminum salt solution and base is stopped.

The thickness of the mixed layer of Al₂O₃/TiO₂ is in general in the range of 20 to 200 nm, especially 50 to 150 nm. Preferably the pigments comprise a TiO₂ layer on top of the mixed layer of Al₂O₃/TiO₂ having a thickness of 1 to 50 nm, especially 10 to 20 nm. By varying the thickness of the mixed layer of Al₂O₃/TiO₂ the flop of the pigments can be enhanced and controlled as desired.

In another preferred embodiment of the present invention is directed to pigments which contain a substrate and subsequent layers of TiO₂/SnO₂/TiO₂, wherein the TiO₂ layer next to the substrate has a thickness of 1 to 20 nm and is preferably prepared by using titanium alcoholates, especially tetraisopropyl titanate.

If the pigment compositions of the present invention are used colorations with customized sparkling effect can be made. Accordingly, the present invention relates to a method for producing pigment compositions with improved sparkle effect and/or for adjusting the sparkle effect by blending an effect pigment with a platelet-like perlite. The pigment compositions of the present invention can impart superior brilliance, clear and intense colors, and intense sparkle effects.

Accordingly, the present invention relates to a method of imparting a sparkling appearance to a surface of an article comprising forming a sparkling coating film over said surface, the sparkling coating film comprising a pigment composition according the present invention.

On the one hand blending of perlite with mica based pigments results in a variation of the angle dependent sparkling area (S_a). On the other hand blending of mica based pigments with perlite results in a higher sparkling intensity (S_i), which effect may even be more pronounced in downflop. In other words, S_i and S_a can be adjusted, as desired, a higher S_i and/or a more modified angle dependency S_a may be obtained.

The pigment compositions according to the invention can be used for all customary purposes, for example for colouring polymers in the mass, coatings (including effect finishes, including those for the automotive sector) and printing inks (including offset printing, intaglio printing, bronzing and flexographic printing), and also, for example, for applications in cosmetics, in ink-jet printing, for dyeing textiles, glazes for ceramics and glass. Such applications are known from reference works, for example "Spezielle Effektpigmente" (G. Pfaff, Vincentz Network, Hannover, 2nd revised edition, 2007).

The pigment compositions of the present invention are very especially suitable for combination with conventional, transparent pigments, for example organic pigments such as, for example, diketopyrrolopyrroles, quinacridones, dioxazines, perylenes, isoindolinones etc., it being possible for the transparent pigment to have a similar colour to the effect pigment. Especially interesting combination effects are obtained, however, in analogy to, for example, EP-A-388 932 or EP- A-402 943, when the colour of the transparent pigment and that of the effect pigment are complementary.

The pigment compositions according to the invention can be used with excellent results for pigmenting high molecular weight organic material.

The high molecular weight organic material for the pigmenting of which the pigment compositions according to the invention may be used may be of natural or synthetic origin. High molecular weight organic materials usually have molecular weights of about from 10³ to 10⁸ g/mol or even more. They may be, for example, natural resins, drying oils, rubber or casein, or natural substances derived therefrom, such as chlorinated rubber, oil-modified alkyd resins, viscose, cellulose ethers or esters, such as ethylcellulose, cellulose acetate, cellulose propionate, cellulose acetobutyrate or nitrocellulose, but especially totally synthetic organic polymers (thermosetting plastics and thermoplastics), as are obtained by polymerisation, polycondensation or polyaddition. From the class of the polymerisation resins there may be mentioned, especially, polyolefins, such as polyethylene, polypropylene or polyisobutylene, and also substituted polyolefins, such as polymerisation products of vinyl chloride, vinyl acetate, styrene, acrylonitrile, acrylic acid esters, methacrylic acid esters or butadiene, and also copolymerisation products of the said monomers, such as especially ABS or EVA.

From the series of the polyaddition resins and polycondensation resins there may be mentioned, for example, condensation products of formaldehyde with phenols, so-called phenoplasts, and condensation products of formaldehyde with urea, thiourea or melamine, so-called aminoplasts, and the polyesters used as surface-coating resins, either saturated, such as alkyd resins, or unsaturated, such as maleate resins; also linear polyesters and polyamides, polyurethanes or silicones.

The said high molecular weight compounds may be present singly or in mixtures, in the form of plastic masses or melts. They may also be present in the form of their monomers or in the polymerised state in dissolved form as film-formers or binders for coatings or printing inks, such as, for example, boiled linseed oil, nitrocellulose, alkyd resins, melamine resins and urea-formaldehyde resins or acrylic resins.

Depending on the intended purpose, it has proved advantageous to use the pigment compositions according to the invention as toners or in the form of preparations. Depending on the conditioning method or intended application, it may be advantageous to add certain amounts of texture-improving agents to the pigment composition before or after the conditioning process, provided that this has no adverse effect on use of the pigment composition for colouring high molecular weight organic materials, especially polyethylene. Suitable agents are, especially, fatty acids containing at least 18 carbon atoms, for example stearic or behenic acid, or amides or metal salts thereof, especially magnesium salts, and also plasticisers, waxes, resin acids, such as abietic acid, rosin soap, alkylphenols or aliphatic alcohols, such as stearyl alcohol, or aliphatic 1,2-dihydroxy compounds containing from 8 to 22 carbon atoms, such as 1,2-dodecanediol, and also modified colophonium maleate resins or fumaric acid colophonium resins. The texture-improving agents are added in amounts of preferably from 0.1 to 30 percent by weight, especially from 2 to 15 percent by weight, based on the end product.

The pigment compositions according to the invention can be added in any tinctorially effective amount to the high molecular weight organic material being pigmented. A pigmented substance composition comprising a high molecular weight organic material and from 0.01 to 80 percent by weight, preferably from 0.1 to 30 percent by weight, based on the high molecular weight organic material, of a pigment composition according to the invention is advantageous. Concentrations of from 1 to 20 percent by weight, especially of about 10 percent by weight, can often be used in practice. High concentrations, for example those above 30 percent by weight, are usually in the form of concentrates ("masterbatches") which can be used as colorants for producing pigmented materials having a relatively low pigment content, the pigments according to the invention having an extraordinarily low viscosity in customary formulations so that they can still be processed well. For the purpose of pigmenting organic materials, the pigment compositions according to the invention may be used singly. It is, however, also possible, in order to achieve different hues or colour effects, to add any desired amounts of other colour-imparting constituents, such as white, coloured, or black pigments, to the high molecular weight organic substances in addition to the pigment compositions according to the invention. When coloured pigments are used in admixture with the effect pigments, the total amount is preferably from 0.1 to 10 percent by weight, based on the high molecular weight organic material. Especially high goniochromicity is provided by the preferred combination of an effect pigment according to the invention with a coloured pigment of another colour, especially of a complementary colour, with colorations made using the effect pigment and colorations made using the coloured pigment having, at a measurement angle of 10 Degrees, a difference in hue (DELTAH*) of from 20 to 340, especially from 150 to 210. Preferably, the effect pigments are combined with transparent coloured pigments, it being possible for the transparent coloured pigments to be present either in the same medium as the effect pigments according to the invention or in a neighbouring medium.

The pigmenting of high molecular weight organic substances with the pigment compositions according to the invention is carried out, for example, by admixing such a pigment composition, where appropriate in the form of a masterbatch, with the substrates using roll mills or mixing or grinding apparatuses. The pigmented material is then brought into the desired final form using methods known per se, such as calendering, compression moulding, extrusion, coating, pouring or injection moulding. Any additives customary in the plastics industry, such as plasticisers, fillers or stabilisers, can be added to the polymer, in customary amounts, before or after incorporation of the pigment. In particular, in order to produce non-rigid shaped articles or to reduce their brittleness, it is desirable to add plasticisers, for example esters of phosphoric acid, phthalic acid or sebacic acid, to the high molecular weight compounds prior to shaping.

For pigmenting coatings and printing inks, the high molecular weight organic materials and the pigment compositions according to the invention, where appropriate together with customary additives such as, for example, fillers, other pigments, siccatives or plasticisers, are finely dispersed or dissolved in the same organic solvent or solvent mixture, it being possible for the individual components to be dissolved or dispersed separately or for a number of components to be dissolved or dispersed together, and only thereafter for all the components to be brought together. Processing a pigment composition according to the invention is preferably carried out subject to conditions under which only relatively weak shear forces occur so that the effect pigment is not broken up into smaller portions. Plastics comprising the pigment of the invention in amounts of 0.1 to 50 percent by weight, in particular 0.5 to 7 percent by weight. In the coating sector, the pigments of the invention are employed in amounts of 0.1 to 10 percent by weight. In the pigmentation of binder systems, for example for paints and printing inks for intaglio, offset or screen printing, the pigment is incorporated into the printing ink in amounts of 0.1 to 50 percent by weight, preferably 5 to 30 percent by weight and in particular 8 to 15 percent by weight.

The colorations obtained, for example in plastics, coatings or printing inks, especially in coatings or printing inks, more especially in coatings, may be distinguished by excellent properties, especially by extremely high saturation, outstanding fastness properties, high color purity, high goniochromaticity and high sparkle intensity at all angles.

When the high molecular weight material being pigmented is a coating, it is especially a speciality coating, very especially an automotive finish.

The pigment compositions according to the invention are also suitable for making-up the lips or the skin and for colouring the hair or the nails.

The invention accordingly relates also to a cosmetic preparation or formulation comprising from 0.0001 to 90 percent by weight of a pigment composition according to the invention and from 10 to 99.9999 percent of a cosmetically suitable carrier material, based on the total weight of the cosmetic preparation or formulation.

Such cosmetic preparations or formulations are, for example, lipsticks, blushers, foundations, nail varnishes and hair shampoos. The pigment compositions may be used singly or in the form of mixtures. It is, in addition, possible to use the pigment compositions according to the invention together with other pigments and/or colorants, for example in combinations as described hereinbefore or as known in cosmetic preparations.

The cosmetic preparations and formulations according to the invention preferably contain the pigment according to the invention in an amount from 0.005 to 50 percent by weight, based on the total weight of the preparation.

Suitable carrier materials for the cosmetic preparations and formulations according to the invention include the customary materials used in such compositions.

The cosmetic preparations and formulations according to the invention may be in the form of, for example, sticks, ointments, creams, emulsions, suspensions, dispersions, powders or solutions. They are, for example, lipsticks, mascara preparations, blushers, eye-shadows, foundations, eyeliners, powder or nail varnishes.

If the preparations are in the form of sticks, for example lipsticks, eye-shadows, blushers or foundations, the preparations consist for a considerable part of fatty components, which may consist of one or more waxes, for example ozokerite, lanolin, lanolin alcohol, hydrogenated lanolin, acetylated lanolin, lanolin wax, beeswax, candelilla wax, microcrystalline wax, carnauba wax, cetyl alcohol, stearyl alcohol, cocoa butter, lanolin fatty acids, petrolatum, petroleum jelly, mono-, di- or tri-glycerides or fatty esters thereof that are solid at 25 degrees centigrade, silicone waxes, such as methyloctadecane-oxypolysiloxane and poly(dimethylsiloxy)- stearoxysiloxane, stearic acid monoethanolamine, colophane and derivatives thereof, such as glycol abietates and glycerol abietates, hydrogenated oils that are solid at 25 degrees centigrade, sugar glycerides and oleates, myristates, lanolates, stearates and dihydroxystearates of calcium, magnesium, zirconium and aluminium.

The fatty component may also consist of a mixture of at least one wax and at least one oil, in which case the following oils, for example, are suitable: paraffin oil, purcelline oil, perhydrosqualene, sweet almond oil, avocado oil, calophyllum oil, castor oil, sesame oil, jojoba oil, mineral oils having a boiling point of about from 310 to 410Degrees centigrade silicone oils, such as dimethylpolysiloxane, linoleyl alcohol, linolenyl alcohol, oleyl alcohol, cereal grain oils, such as wheatgerm oil, isopropyl lanolate, isopropyl palmitate, isopropyl myristate, butyl myristate, cetyl myristate, hexadecyl stearate, butyl stearate, decyl oleate, acetyl glycerides, octanoates and decanoates of alcohols and polyalcohols, for example of glycol and glycerol, ricinoleates of alcohols and polyalcohols, for example of cetyl alcohol, isostearyl alcohol, isocetyl lanolate, isopropyl adipate, hexyl laurate and octyl dodecanol.

The fatty components in such preparations in the form of sticks may generally constitute up to 99.91 percent by weight of the total weight of the preparation. The cosmetic preparations and formulations according to the invention may additionally comprise further constituents, such as, for example, glycols, polyethylene glycols, polypropylene glycols, monoalkanolamides, non-coloured polymeric, inorganic or organic fillers, preservatives, UV filters or other adjuvants and additives customary in cosmetics, for example a natural or synthetic or partially synthetic di- or tri-glyceride, a mineral oil, a silicone oil, a wax, a fatty alcohol, a Guerbet alcohol or ester thereof, a lipophilic functional cosmetic active ingredient, including sun-protection filters, or a mixture of such substances. A lipophilic functional cosmetic active ingredient suitable for skin cosmetics, an active ingredient composition or an active ingredient extract is an ingredient or a mixture of ingredients that is approved for dermal or topical application. The following may be mentioned by way of example: active ingredients having a cleansing action on the skin surface and the hair; these include all substances that serve to cleanse the skin, such as oils, soaps, synthetic detergents and solid substances; active ingredients having a deodorising and perspiration-inhibiting action: they include antiperspirants based on aluminium salts or zinc salts, deodorants comprising bactericidal or bacteriostatic deodorising substances, for example triclosan, hexachlorophene, alcohols and cationic substances, such as, for example, quaternary ammonium salts, and odour absorbers, for example (R)Grillocin (combination of zinc ricinoleate and various additives) or triethyl citrate (optionally in combination with an antioxidant, such as, for example, butyl hydroxytoluene) or ion-exchange resins; active ingredients that offer protection against sunlight (UV filters): suitable active ingredients are filter substances (sunscreens) that are able to absorb UV radiation from sunlight and convert it into heat; depending on the desired action, the following light- protection agents are preferred: light-protection agents that selectively absorb sunburn- causing high-energy UV radiation in the range of approximately from 280 to 315 nm

(UV-B absorbers) and transmit the longer-wavelength range of, for example, from 315 to 400 nm (UV-A range), as well as light-protection agents that absorb only the longer- wavelength radiation of the UV-A range of from 315 to 400 nm (UV-A absorbers); suitable light-protection agents are, for example, organic UV absorbers from the class of the p-aminobenzoic acid derivatives, salicylic acid derivatives, benzophenone derivatives, dibenzoylmethane derivatives, diphenyl acrylate derivatives, benzofuran derivatives, polymeric UV absorbers comprising one or more organosilicon radicals, cinnamic acid derivatives, camphor derivatives, trianilino-s-triazine derivatives, phenyl- benzimidazolesulfonic acid and salts thereof, menthyl anthranilates, benzotriazole derivatives, and/or an inorganic micropigment selected from aluminium oxide- or silicon dioxide-coated T?O2, zinc oxide or mica; active ingredients against insects (repellents) are agents that are intended to prevent insects from touching the skin and becoming active there; they drive insects away and evaporate slowly; the most frequently used repellent is diethyl toluamide (DEET); other common repellents will be found, for example, in "Pflegekosmetik" (W. Raab and U.

Kindl, Gustav-Fischer-Verlag Stuttgart/New York, 1991) on page 161; active ingredients for protection against chemical and mechanical influences: these include all substances that form a barrier between the skin and external harmful substances, such as, for example, paraffin oils, silicone oils, vegetable oils, PCL products and lanolin for protection against aqueous solutions, film-forming agents, such as sodium alginate, triethanolamine alginate, polyacrylates, polyvinyl alcohol or cellulose ethers for protection against the effect of organic solvents, or substances based on mineral oils, vegetable oils or silicone oils as "lubricants" for protection against severe mechanical stresses on the skin; moisturising substances: the following substances, for example, are used as moisture- controlling agents (moisturisers): sodium lactate, urea, alcohols, sorbitol, glycerol, propylene glycol, collagen, elastin and hyaluronic acid; active ingredients having a keratoplastic effect: benzoyl peroxide, retinoic acid, colloidal sulfur and resorcinol; antimicrobial agents, such as, for example, triclosan or quaternary ammonium compounds; oily or oil-soluble vitamins or vitamin derivatives that can be applied dermally: for example vitamin A (retinol in the form of the free acid or derivatives thereof), panthenol, pantothenic acid, folic acid, and combinations thereof, vitamin E (tocopherol), vitamin F; essential fatty acids; or niacinamide (nicotinic acid amide); - vitamin-based placenta extracts: active ingredient compositions comprising especially vitamins A, C, E, B1, B2, B6, B12, folic acid and biotin, amino acids and enzymes as well as compounds of the trace elements magnesium, silicon, phosphorus, calcium, manganese, iron or copper; skin repair complexes: obtainable from inactivated and disintegrated cultures of bacteria of the bifidus group; plants and plant extracts: for example arnica, aloe, beard lichen, ivy, stinging nettle, ginseng, henna, camomile, marigold, rosemary, sage, horsetail or thyme; animal extracts: for example royal jelly, propolis, proteins or thymus extracts; cosmetic oils that can be applied dermally: neutral oils of the Miglyol 812 type, apricot kernel oil, avocado oil, babassu oil, cottonseed oil, borage oil, thistle oil, groundnut oil, gamma-oryzanol, rosehip-seed oil, hemp oil, hazelnut oil, blackcurrant-seed oil, jojoba oil, cherry-stone oil, salmon oil, linseed oil, cornseed oil, macadamia nut oil, almond oil, evening primrose oil, mink oil, olive oil, pecan nut oil, peach kernel oil, pistachio nut oil, rape oil, rice- seed oil, castor oil, safflower oil, sesame oil, soybean oil, sunflower oil, tea tree oil, grapeseed oil or wheatgerm oil.

The preparations in stick form are preferably anhydrous but may in certain cases comprise a certain amount of water which, however, in general does not exceed 40 percent by weight, based on the total weight of the cosmetic preparation.

If the cosmetic preparations and formulations according to the invention are in the form of semi-solid products, that is to say in the form of ointments or creams, they may likewise be anhydrous or aqueous. Such preparations and formulations are, for example, mascaras, eyeliners, foundations, blushers, eye-shadows, or compositions for treating rings under the eyes.

If, on the other hand, such ointments or creams are aqueous, they are especially emulsions of the water-in-oil type or of the oil-in-water type that comprise, apart from the pigment, from 1 to 98.8 percent by weight of the fatty phase, from 1 to 98.8 percent by weight of the aqueous phase and from 0.2 to 30 percent by weight of an emulsifier.

Such ointments and creams may also comprise further conventional additives, such as, for example, perfumes, antioxidants, preservatives, gel-forming agents, UV filters, colorants, pigments, pearlescent agents, non-coloured polymers as well as inorganic or organic fillers. If the preparations are in the form of a powder, they consist substantially of a mineral or inorganic or organic filler such as, for example, talcum, kaolin, starch, polyethylene powder or polyamide powder, as well as adjuvants such as binders, colorants etc.

Such preparations may likewise comprise various adjuvants conventionally employed in cosmetics, such as fragrances, antioxidants, preservatives etc. If the cosmetic preparations and formulations according to the invention are nail varnishes, they consist essentially of nitrocellulose and a natural or synthetic polymer in the form of a solution in a solvent system, it being possible for the solution to comprise other adjuvants, for example pearlescent agents.

In that embodiment, the coloured polymer is present in an amount of approximately from 0.1 to 5 percent by weight.

The cosmetic preparations and formulations according to the invention may also be used for colouring the hair, in which case they are used in the form of shampoos, creams or gels that are composed of the base substances conventionally employed in the cosmetics industry and a pigment according to the invention. The cosmetic preparations and formulations according to the invention are prepared in conventional manner, for example by mixing or stirring the components together, optionally with heating so that the mixtures melt.

Paints, printing inks, plastics, cosmetics etc. can also be produced by adding an effect pigment and a platelet-like perlite separately to the formulations. Accordingly, the present invention relates to paints, printing inks, plastics, cosmetics, ceramics and glass, which are pigmented with A) a platelet-like perlite (perlite); and B) an effect pigment. The platelet-like perlite (perlite); and the effect pigment are as defined above.

Various features and aspects of the present invention are illustrated further in the examples that follow. While these examples are presented to show one skilled in the art how to operate within the scope of this invention, they are not to serve as a limitation on the scope of the invention where such scope is only defined in the claims. Unless otherwise indicated in the following examples and elsewhere in the specification and claims, all parts and percentages are by weight, temperatures are in degrees centigrade and pressures are at or near atmospheric.

### Examples

### Preparation of perlite (PerPro1)

Perlite flakes are prepared as described in example 1 of WO2010/066605:
a) Perlite flakes (Optimat™ 2550 from World Minerals) are homogeneously dispersed in deionized water in an amount of 10 % by weight. The particles are let to settle 5 minutes and the settled particles are removed from the suspension. The operation is repeated 3 times. Said operation allows eliminating 3D twin structure particles contained in milled expanded perlite.
b) Then the particles in suspension are let to settle during 8 hours. After that the water containing the smallest particles of perlite is disgarded. The operation is repeated 3 times.
Then the particles are filtered and dried. The particle size distribution of the obtained perlite particles (= **PerPro1**), measured by laser (He-Ne laser 632.8 nm) light diffraction with a Malvern Mastersizer S Longbench, shows the following parameters:

| **D (v,0.1)** | **D (v,0.5)** | **D (v,0.9)** |
|---|---|---|
| **µm** | **µm** | **µm** |
| **9.4** | **25.1** | **51.5** |

### Example 1 - Mixtures of Perlite (PerPro1) with a red, iron oxide (F₂O₃) coated mica

X g of a red, iron oxide coated mica (d₅₀ ∼ 20 µm) is dry-blended with y g PerPro1 in a dry-blender. The mixtures are sprayed as described below in a 90:10 black reduction.

| **Name of sample** | **x g Fe₂O₃ mica/** | **y g PerPro 1** |
|---|---|---|
| **ComPro1** | 90 | 0 |
| **Pro1** | 85 | 5 |
| **Pro2** | 80 | 10 |
| **Pro3** | 75 | 15 |
| **Pro4** | 60 | 30 |

**Fig. 1** is a graph showing the Sparkling intensity (S_i) vs. the Sparkling area (S_a) [illumination angle: 75°, 45° and 15° from the left hand side to right hand side] of **Pro1** to **Pro4** and **ComPro1.**

### Example 2 - Mixtures of PerPro1 with a white, titanium oxide coated synthetic mica

X g of a white, titanium oxide coated synthetic mica (d₅₀ ∼ 20 µm) is dry-blended with y g PerPro1 in a dry-blender. The mixtures are sprayed as described below in a 90:10 black reduction.

| **Name of sample** | **x g TiO₂ coated synthetic mica** | **y g PerPro 1** |
|---|---|---|
| **ComPro2** | 90 | 0 |
| **Pro5** | 85 | 5 |
| **Pro6** | 80 | 10 |
| **Pro7** | 60 | 30 |

**Fig. 2** is a graph showing the Sparkling intensity (S_i) vs. the Sparkling area (S_a) of **Pro5** to **Pro7** and **ComPro2.**

### Example 3 - Mixture of PerPro1 with a titanium oxide coated glass flakes

X g of a a titanium oxide coated glass flakes (d₅₀ ∼ 20 µm) is dry-blended with y g PerPro1 in a dry-blender. The mixture is sprayed as described below in a 90:10 black reduction.

| **Name of sample** | **x g TiO₂ coated glass flakes** | **y g PerPro 1** |
|---|---|---|
| **ComPro3** | **90** | **0** |
| **Pro8** | **80** | **10** |

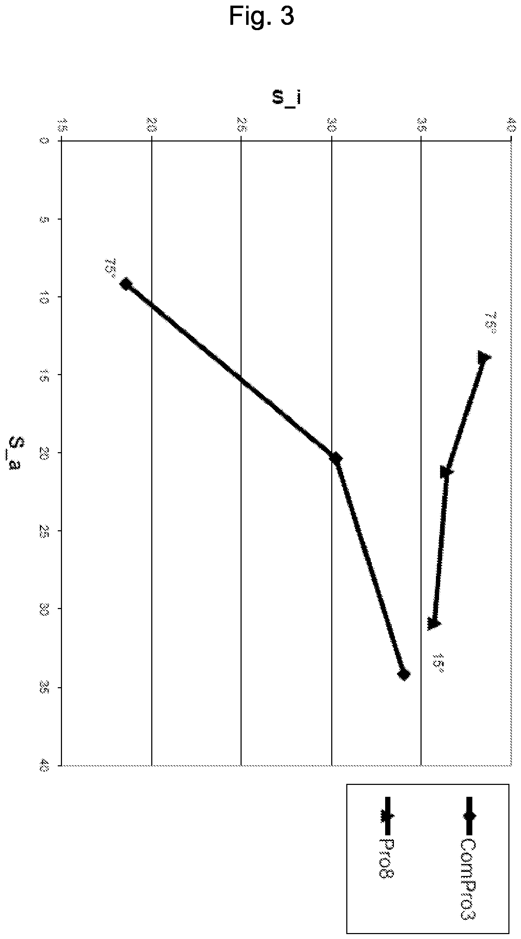

**Fig. 3** is a graph showing the Sparkling intensity (S_i) vs. the Sparkling area (S_a) of **Pro8** and **ComPro3.**

### Example 4 - Mixtures of PerPro1 with orange, iron oxide coated aluminum flakes

X g of an orange, iron oxide coated aluminum flakes (d₅₀ ∼ 21 µm) is dry-blended with y g PerPro1 in a dry-blender. The mixtures are sprayed as described below in a 90:10 black reduction.

| **Name of sample** | **x g Fe₂O₃ coated Al flakes** | **y g PerPro 1** |
|---|---|---|
| **ComPro4** | 90 | 0 |
| **Pro9** | 85 | 5 |
| **Pro10** | 80 | 10 |
| **Pro11** | 75 | 15 |
| **Pro12** | 60 | 30 |

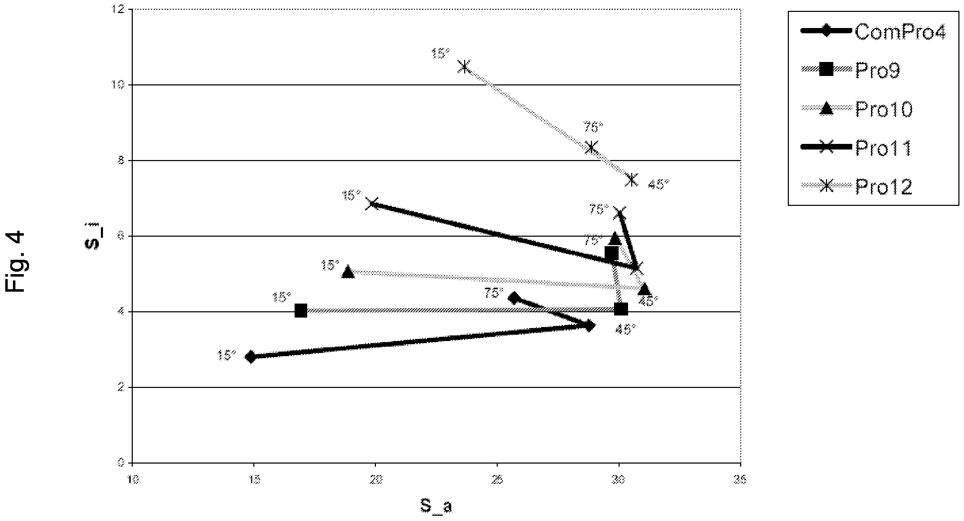

**Fig. 4** is a graph showing the Sparkling intensity (S_i) vs. the Sparkling area (S_a) of **Pro9** to **Pro12** and **ComPro4.**

### Example 5 - Mixtures of PerPro1 with aluminum flakes

X g of silver dollar aluminum flakes(d₅₀ ∼ 19 µm) is dry-blended with y g PerPro1 in a dry-blender. The mixtures are sprayed as described below in a 90:10 black reduction.

| **Name of sample** | **x g silver dollar Al flakes** | **y g PerPro 1** |
|---|---|---|
| **ComPro5** | 90 | 0 |
| **Pro13** | 85 | 5 |
| **Pro14** | 80 | 10 |
| **Pro15** | 75 | 15 |
| **Pro16** | 60 | 30 |

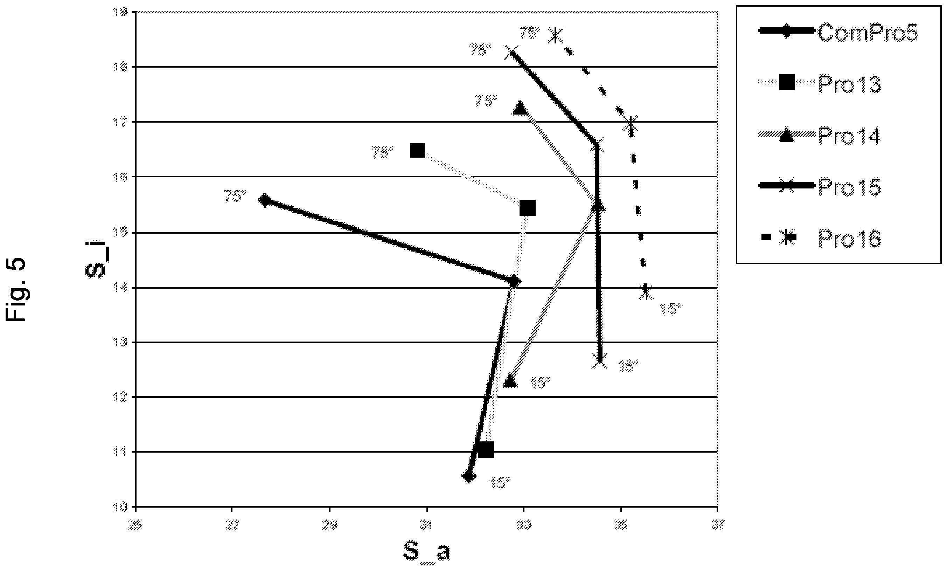

**Fig. 5** is a graph showing the Sparkling intensity (S_i) vs. the Sparkling area (S_a) of **Pro13** to **Pro16** and **ComPro5.**

### Example 6 - Mixtures of PerPro1 with white, titanium oxide coated Al₂O₃ flakes

X g of a titanium oxide coated Al₂O₃ flakes(d₅₀ ∼ 19 µm) is dry-blended with y g PerPro1 in a dry-blender. The mixtures are sprayed as described below in a 90:10 black reduction.

| **Name of sample** | **x g TiO₂ coated Al₂O₃ flakes** | **y g PerPro 1** |
|---|---|---|
| **ComPro6** | 90 | 0 |
| **Pro17** | 85 | 5 |
| **Pro18** | 80 | 10 |
| **Pro19** | 75 | 15 |
| **Pro20** | 60 | 30 |

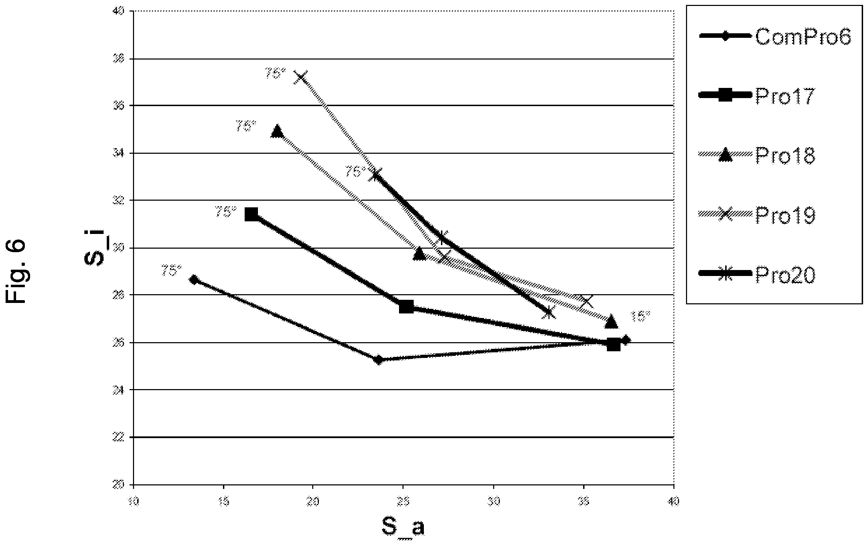

**Fig. 6** is a graph showing the Sparkling intensity (S_i) vs. the Sparkling area (S_a) of **Pro17** to **Pro20** and **ComPro6.**

### Example 7 - Mixtures of PerPro1 with titanium oxide coated mica

X g of a white, titanium oxide coated mica (d₅₀ ∼ 20 µm) is dry-blended with y g PerPro1 in a dry-blender. The mixtures are sprayed as described below in a 90:10 black reduction.

| **Name of sample** | **X g TiO₂ coated mica (white)** | **Y g Perpro 1** |
|---|---|---|
| **ComPro7** | **90** | **0** |
| **Pro21** | **85** | **5** |
| **Pro22** | **80** | **10** |
| **Pro23** | **75** | **15** |
| **Pro24** | **60** | **30** |

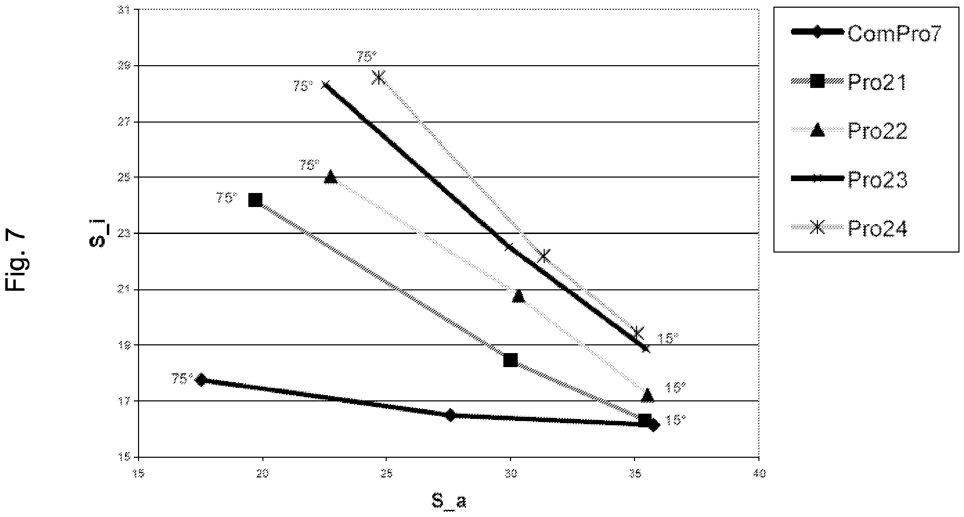

**Fig. 7** is a graph showing the Sparkling intensity (S_i) vs. the Sparkling area (S_a) of **Pro21** to **Pro24** and **ComPro7.**

### Example 8 - Mixtures of PerPro1 with a titanium oxide coated mica with blue interference color

X g of a titanium oxide coated mica (d₅₀ ∼ 20 µm) with blue interference color is dry-blended with y g PerPro1 in a dry-blender. The mixtures are sprayed as described below in a 90:10 black reduction.

| **Name of sample** | **x g TiO₂ coated mica (blue)** | **y g Perpro 1** |
|---|---|---|
| **Compro8** | 90 | 0 |
| **Pro25** | 85 | 5 |
| **Pro26** | 80 | 10 |
| **Pro27** | 75 | 15 |
| **Pro28** | 60 | 30 |

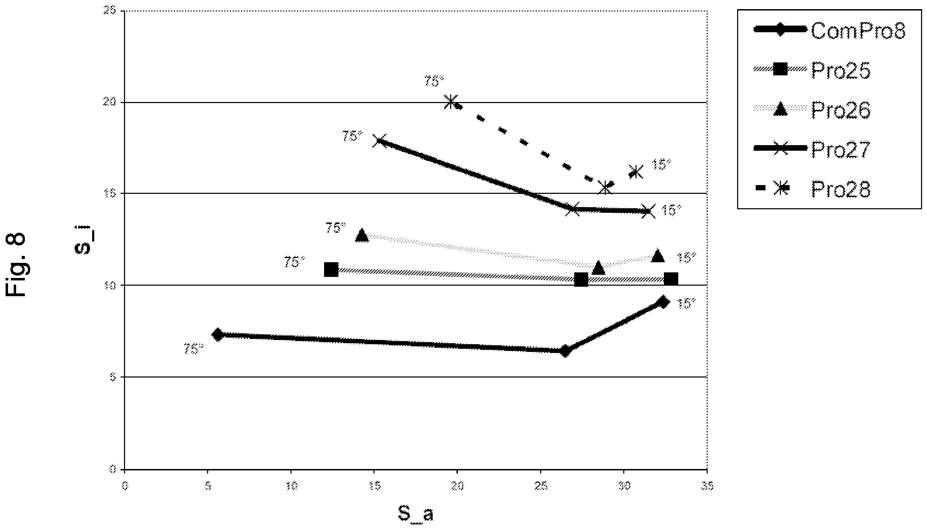

**Fig. 8** is a graph showing the Sparkling intensity (S_i) vs. the Sparkling area (S_a) of **Pro25** to **Pro28** and **ComPro8.**

### Test system for determination of the sparkling behavior

All examples are tested in a basecoat/clearcoat spray application:

### Basecoat:

Polyester/CAB, solventborne, medium solid, dry film thickness -20 µm
Total Pigment: Binder (solid) = 0.20
Pigmentation: 90 parts pigment composition : 10 parts Colour Black FW 200 (Evonik Industries)
The dry blend of 90 parts pigment composition is combined in a binder with 10 parts of a black pigment.

### Clearcoat:

1K-clearcoat, -40 µm dry-film thickness

### Quantitative determination of the angle dependant sparkling behaviour

The sparkling effects of the pigment compositions of Examples 1 to 8 are measured using a Byk-mac device from Byk-Gardner GmbH (Lausitzer Straße 8, 82538 Geretsried, Germany). This device is allowing to measure sparkle and graininess for flake characterization. Accordingly, the sparkling behaviour of the products (**Pro1** to **Pro28**) and the comparative products (**ComPro1** to **ComPro8**) is characterized for three different illumination angles (direct illumination: 15°, 45° and 75° from perpendicular; camera detection: 0°) with the following parameters :
- Sparkling area (S_a) corresponds to the number of light reflections within the measuring given;
- Sparkling intensity (S_i) corresponds the intensity of the light reflections.

## Claims

1. A pigment composition, comprising
A) a platelet-like particle consisting of perlite (perlite); and
B) an effect pigment, wherein the effect pigment is selected from a platelet-like substrate, coated with (a) dielectric material, and/or metal layer, metal effect pigments and platelet-like organic pigments.

2. The pigment composition according to claim 1, wherein the platelet-like substrate is selected from natural mica, synthetic mica, SiO₂ flakes, Al₂O₃ flakes, TiO₂ flakes, Fe₂O₃ flakes, BiOCI, glass flakes and metal flakes.

3. The pigment composition according to claim 2, wherein the platelet-like substrate is coated with one, or more layers of a metal oxide selected from TiO₂, ZrO₂, Fe₂O₃, Fe₃O₄, Cr₂O₃, ZnO, SnO₂, or mixtures of said metal oxides.

4. The pigment composition according to claim 1, wherein the effect pigment is an aluminium pigment, an aluminium based pigment coated with (metal) oxides, a platelet-like copper phthalocyanine, a platelet-like 1,9-dichloroquinacridone, or a platelet-like 1,9-dichloroanthraquinone.

5. The pigment composition according to claim 2, wherein the platelet-like substrate is coated with at least three alternating layers of high and low refractive index.

6. The pigment composition according to any of claims 1 to 3, wherein the effect pigment has the following laver structure:
| | | | |
|---|---|---|---|
| TRASUB | TiO₂ | SiO₂ | TiO₂ |
| TRASUB | TiO₂ | SiO₂ | Fe₂O₃ |
| TRASUB | TiO₂ | SiO₂ | TiO₂•Fe₂O₃ |
| TRASUB | TiO₂ | SiO₂ | (Sn,Sb)O₂ |
| TRASUB | (Sn,Sb)O₂ | SiO₂ | TiO₂ |
| TRASUB | Fe₂O₃ | SiO₂ | (Sn,Sb)O₂ |
| TRASUB | TiO₂•Fe₂O₃ | SiO₂ | TiO₂•Fe₂O₃ |
| TRASUB | TiO₂ | SiO₂ | MoS₂ |
| TRASUB | TiO₂ | SiO₂ | Cr₂O₃ |
| TRASUB | Cr₂O₃ | SiO₂ | TiO₂ |
| TRASUB | Fe₂O₃ | SiO₂ | TiO₂ |
| TRASUB | TiO₂ | Al₂O₃ | TiO₂ |
| TRASUB | Fe₂TiO₅ | SiO₂ | TiO₂ |
| TRASUB | TiO₂ | SiO₂ | Fe₂TiO₅/ TiO₂ |
| TRASUB | TiO suboxides | SiO₂ | TiO suboxides |
| TRASUB | TiO₂ | SiO₂ | TiO₂/SiO₂/TiO₂ + Prussian Blue |
| TRASUB | TiO₂ | SiO₂ | TiO₂/SiO₂/TiO₂ |
| TRASUB | TiO₂/SiO₂/TiO₂ | SiO₂ | TiO₂/SiO₂/TiO₂ |
| TRASUB | (SnO₂)TiO₂ | SiO₂ | (SnO₂)TiO₂ |
wherein TRASUB is a transparent substrate having a low index of refraction selected from the group consisting of natural, or synthetic mica, another layered silicate, glass, Al₂O₃, or SiO₂.

7. The pigment composition according to any of claims 1 to 6, wherein the perlite has a medium particle size of less than 150 µm and more than 5 µm.

8. The pigment composition according to any of claims 1 to 7, wherein the platelet-like substrate has a medium particle size of from 10 - 300 µm, more preferably 10 - 150 µm.

9. The pigment composition according to claims 7, or 8, wherein the medium particle size of the effect pigment is x µm and the medium particle size of the perlite to be added is x µm +/- 25%.

10. The pigment composition according to claims 7, or 8, wherein mica based pigments with a medium particle size of 12 to 30 µm are combined with perlite with a medium particle size of 12 to 30 µm.

11. Use of the pigment compositions according to any of claims 1 to 10 in paints, ink-jet printing, for dyeing textiles, for pigmenting coatings, printing inks, plastics, cosmetics, glazes for ceramics and glass.

12. Paints, printing inks, plastics, cosmetics, ceramics and glass, which are pigmented with a pigment composition according to any of claims 1 to 10.

13. A process for the production of the pigment composition according to claim 1, comprising blending of an effect pigment, as defined in claim 1, and of a platelet-like particle consisting of perlite.

14. A method of imparting a sparkling appearance to a surface of an article comprising forming a sparkling coating film over said surface, the sparkling coating film comprising a pigment composition according to any of claims 1 to 10.

## Patentansprüche

1. Pigmentzusammensetzung, umfassend
A) ein plättchenförmiges Teilchen aus Perlit (Perlit) und
B) ein Effektpigment, wobei das Effektpigment aus einem plättchenförmigen Substrat, das mit einem dielektrischen Material und/oder einer Metallschicht beschichtet ist, Metalleffektpigmenten und plättchenförmigen organischen Pigmenten ausgewählt ist.

2. Pigmentzusammensetzung nach Anspruch 1, wobei das plättchenförmige Substrat aus natürlichem Glimmer, synthetischem Glimmer, SiO₂-Plättchen, Al₂O₃-Plättchen, TiO₂-Plättchen, Fe₂O₃-Plättchen, BiOCl, Glasplättchen und Metallplättchen ausgewählt ist.

3. Pigmentzusammensetzung nach Anspruch 2, wobei das plättchenförmige Substrat mit einer oder mehreren Schichten eines Metalloxids, das aus TiO₂, ZrO₂, Fe₂O₃, Fe₃O₄, Cr₂O₃, ZnO, SnO₂ oder Mischungen der Metalloxide ausgewählt ist, beschichtet ist.

4. Pigmentzusammensetzung nach Anspruch 1, wobei es sich bei dem Effektpigment um ein Aluminiumpigment, ein mit (Metall)oxiden beschichtetes Pigment auf Aluminiumbasis, ein plättchenförmiges Kupferphthalocyanin, ein plättchenförmiges 1,9-Dichlorchinacridon oder ein plättchenförmiges 1,9-Dichloranthrachinon handelt.

5. Pigmentzusammensetzung nach Anspruch 2, wobei das plättchenförmige Substrat mit mindestens drei alternierenden Schichten mit hohem und niedrigem Brechungsindex beschichtet ist.

6. Pigmentzusammensetzung nach einem der Ansprüche 1 bis 3, wobei das Effektpigment die folgende Schichtstruktur aufweist:
| | | | |
|---|---|---|---|
| TRASUB | TiO₂ | SiO₂ | TiO₂ |
| TRASUB | TiO₂ | SiO₂ | Fe₂O₃ |
| TRASUB | TiO₂ | SiO₂ | TiO₂•Fe₂O₃ |
| TRASUB | TiO₂ | SiO₂ | (Sn,Sb) O₂ |
| TRASUB | (Sn,Sb) O₂ | SiO₂ | TiO₂ |
| TRASUB | Fe₂O₃ | SiO₂ | (Sn,Sb)O₂ |
| TRASUB | TiO₂•Fe₂O₃ | SiO₂ | TiO₂•Fe₂O₃ |
| TRASUB | TiO₂ | SiO₂ | MoS₂ |
| TRASUB | TiO₂ | SiO₂ | Cr₂O₃ |
| TRASUB | Cr₂O₃ | SiO₂ | TiO₂ |
| TRASUB | Fe₂O₃ | SiO₂ | TiO₂ |
| TRASUB | TiO₂ | Al₂O₃ | TiO₂ |
| TRASUB | Fe₂TiO₅ | SiO₂ | TiO₂ |
| TRASUB | TiO₂ | SiO₂ | Fe₂TiO₅/TiO₂ |
| TRASUB | TiO-Suboxide | SiO₂ | TiO-Suboxide |
| TRASUB | TiO₂ | SiO₂ | TiO₂/SiO₂/TiO₂ + Berliner Blau |
| TRASUB | TiO₂ | SiO₂ | TiO₂/SiO₂/TiO₂ |
| TRASUB | TiO₂/SiO₂/TiO₂ | SiO₂ | TiO₂/SiO₂/TiO₂ |
| TRASUB | (SnO₂) TiO₂ | SiO₂ | (SnO₂) TiO₂ |
wobei TRASUB für ein transparentes Substrat mit einem niedrigen Brechungsindex aus der Gruppe bestehend aus natürlichem oder synthetischem Glimmer, einem anderen Schichtsilicat, Glas, Al₂O₃ oder SiO₂ steht.

7. Pigmentzusammensetzung nach einem der Ansprüche 1 bis 6, wobei der Perlit eine mittlere Teilchengröße von weniger als 150 µm und mehr als 5 µm aufweist.

8. Pigmentzusammensetzung nach einem der Ansprüche 1 bis 7, wobei das plättchenförmige Substrat eine mittlere Teilchengröße von 10-300 µm, weiter bevorzugt 10-150 µm, aufweist.

9. Pigmentzusammensetzung nach Anspruch 7 oder 8, wobei die mittlere Teilchengröße des Effektpigments x µm beträgt und die mittlere Teilchengröße des zuzusetzenden Perlits x µm +/-25% beträgt.

10. Pigmentzusammensetzung nach Anspruch 7 oder 8, wobei auf Glimmer basierende Pigmente mit einer mittleren Teilchengröße von 12 bis 30 µm mit Perlit mit einer mittleren Teilchengröße von 12 bis 30 µm kombiniert sind.

11. Verwendung der Pigmentzusammensetzung nach einem der Ansprüche 1 bis 10 in Anstrichmitteln, beim Tintenstrahldruck, zum Färben von Textilien, zum Pigmentieren von Beschichtungen, Druckfarben, Kunststoffen, Kosmetika, Glasuren für Keramiken und Gläser.

12. Anstrichmittel, Druckfarben, Kunststoffe, Kosmetika, Keramiken und Gläser, die mit einer Pigmentzusammensetzung nach einem der Ansprüche 1 bis 10 pigmentiert sind.

13. Verfahren zur Herstellung der Pigmentzusammensetzung nach Anspruch 1, bei dem man ein Effektpigment gemäß Anspruch 1 und ein plättchenförmiges Teilchen aus Perlit mischt.

14. Verfahren zum Versehen einer Oberfläche eines Gegenstands mit einem glitzernden Aussehen, bei dem man über der Oberfläche einen glitzernden Beschichtungsfilm bildet, wobei der glitzernde Beschichtungsfilm eine Pigmentzusammensetzung nach einem der Ansprüche 1 bis 10 umfasst.

## Revendications

1. Composition de pigment, comprenant
A) une particule lamellaire constituée de perlite (perlite) ; et
B) un pigment à effet,
dans laquelle le pigment à effet est choisi entre un substrat lamellaire, revêtu de (a) un matériau diélectrique et/ou une couche métallique, des pigments à effet métallique et des pigments organiques lamellaires.

2. Composition de pigment selon la revendication 1, dans laquelle le substrat lamellaire est choisi entre le mica naturel, le mica synthétique, des paillettes de SiO₂, des paillettes d'Al₂O₃, des paillettes de TiO₂, des paillettes de Fe₂O₃, BiOCl, des paillettes de verre et des paillettes métalliques.

3. Composition de pigment selon la revendication 2, dans laquelle le substrat lamellaire est revêtu d'une ou plusieurs couches d'un oxyde métallique choisi entre TiO₂, ZrO₂, Fe₂O₃, Fe₃O₄, Cr₂O₃, ZnO, SnO₂ ou des mélanges desdits oxydes métalliques.

4. Composition de pigment selon la revendication 1, dans laquelle le pigment à effet est un pigment d'aluminium, un pigment à base d'aluminium revêtu d'oxydes (métalliques), une phtalocyanine de cuivre lamellaire, une 1,9-dichloroquinacridone lamellaire ou une 1,9-dichloroanthraquinone lamellaire.

5. Composition de pigment selon la revendication 2, dans laquelle le substrat lamellaire est revêtu d'au moins trois couches alternées d'indice de réfraction élevé et faible.

6. Composition de pigment selon l'une quelconque des revendications 1 à 3, dans laquelle le pigment à effet a la structure en couches suivante :
| | | | |
|---|---|---|---|
| TRASUB | TiO₂ | SiO₂ | TiO₂ |
| TRASUB | TiO₂ | SiO₂ | Fe₂O₃ |
| TRASUB | TiO₂ | SiO₂ | TiO₂•Fe₂O₃ |
| TRASUB | TiO₂ | SiO₂ | (Sn, Sb) O₂ |
| TRASUB | (Sn, Sb) O₂ | SiO₂ | TiO₂ |
| TRASUB | Fe₂O₃ | SiO₂ | (Sn,Sb)O₂ |
| TRASUB | TiO₂•Fe₂O₃ | SiO₂ | TiO₂•Fe₂O₃ |
| TRASUB | TiO₂ | SiO₂ | MoS₂ |
| TRASUB | TiO₂ | SiO₂ | Cr₂O₃ |
| TRASUB | Cr₂O₃ | SiO₂ | TiO₂ |
| TRASUB | Fe₂O₃ | SiO₂ | TiO₂ |
| TRASUB | TiO₂ | Al₂O₃ | TiO₂ |
| TRASUB | Fe₂TiO₅ | SiO₂ | TiO₂ |
| TRASUB | TiO₂ | SiO₂ | Fe₂TiO₅/TiO₂ |
| TRASUB | Sous-oxydes TiO | SiO₂ | Sous-oxydes TiO |
| TRASUB | TiO₂ | SiO₂ | TiO₂/SiO₂/TiO₂ + bleu de Prusse |
| TRASUB | TiO₂ | SiO₂ | TiO₂/SiO₂/TiO₂ |
| TRASUB | TiO₂/SiO₂/TiO₂ | SiO₂ | TiO₂/SiO₂/TiO₂ |
| TRASUB | (SnO₂) TiO₂ | SiO₂ | (SnO₂) TiO₂ |
TRASUB étant un substrat transparent ayant un faible indice de réfraction choisi dans le groupe constitué par le mica naturel ou synthétique, un autre phyllosilicate, le verre, Al₂O₃ ou SiO₂.

7. Composition de pigment selon l'une quelconque des revendications 1 à 6, dans laquelle la perlite a une taille moyenne des particules inférieure à 150 µm et supérieure à 5 µm.

8. Composition de pigment selon l'une quelconque des revendications 1 à 7, dans laquelle le substrat lamellaire a une taille moyenne des particules de 10-300 µm, de manière plus préférée de 10-150 µm.

9. Composition de pigment selon les revendications 7 ou 8, dans laquelle la taille moyenne des particules du pigment à effet est de x µm et la taille moyenne des particules de la perlite à ajouter est de x µm ± 25 %.

10. Composition de pigment selon les revendications 7 ou 8, dans laquelle des pigments à base de mica ayant une taille moyenne des particules de 12 à 30 µm sont combinés avec de la perlite ayant une taille moyenne des particules de 12 à 30 µm.

11. Utilisation des compositions de pigment selon l'une quelconque des revendications 1 à 10 dans des peintures, l'impression par jet d'encre, pour la teinture de textiles, pour la pigmentation de revêtements, d'encres d'impression, de plastiques, de cosmétiques, de glaçures pour des céramiques et de verre.

12. Peintures, encres d'impression, plastiques, cosmétiques, céramiques et verre, qui sont pigmentés avec une composition de pigment selon l'une quelconque des revendications 1 à 10.

13. Procédé pour la production de la composition de pigment selon la revendication 1, comprenant le mélange d'un pigment à effet, tel que défini dans la revendication 1, et d'une particule lamellaire constituée de perlite.

14. Procédé consistant à conférer un aspect étincelant à une surface d'un article comprenant la formation d'un film de revêtement étincelant sur ladite surface, le film de revêtement étincelant comprenant une composition de pigment selon l'une quelconque des revendications 1 à 10.
